# EUROPEAN PATENT APPLICATION

(11) **EP 4 132 063 A1**
(43) Date of publication of application: **08.02.2023**
(21) Application number: 21792359.8
(22) Date of filing: 17.04.2021
(51) Int. Cl.: H04W 24/02

(54) **METHOD FOR RENDERING MEDIA CONTENT, AND SYSTEM AND RELATED DEVICE**

(30) Priority: 24.04.2020 CN 202010330789
(71) Applicant: Huawei Technologies Co., Ltd., Shenzhen, Guangdong 518129 (CN)
(72) Inventor: CHANG, Lijuan, Shenzhen, Guangdong 518129 (CN); ZHANG, Yuanyuan, Shenzhen, Guangdong 518129 (CN); WU, Gang, Shenzhen, Guangdong 518129 (CN); PENG, Yunfeng, Shenzhen, Guangdong 518129 (CN)
(74) Representative: Isarpatent
(86) International application number: PCT/CN2021/087944
(87) International publication number: WO 2021/213289

(57) **Abstract**

A method for rendering media content is provided, is used to trigger user equipment in a call service to render target media content on a target rendering occasion, and includes: receiving call signaling of the call service from a call session control device; obtaining call context information of the user equipment, for example, call status information, key sequence information, existing call duration, predicted call duration, plan information/account information, or location information of the user equipment, based on the call signaling; and determining the target rendering occasion and/or the target media content based on the call context information. The method helps improve an advertising effect in a call process, and therefore utilization of network resources of a telecommunications operator is improved.

## Description

This application claims priority to Chinese Patent Application No. 202010330789.2, filed with the China National Intellectual Property Administration on April 24, 2020 and entitled "METHOD FOR RENDERING MEDIA CONTENT, SYSTEM, AND RELATED DEVICE", which is incorporated herein by reference in its entirety.

### TECHNICAL FIELD

This application relates to the communications field, and in particular, to a method for rendering media content in a call process, a system, and a related device.

### BACKGROUND

With development of mobile communications network technologies, technologies such as a VoLTE (Voice over Long-Term Evolution, voice over long-term evolution) communications network and a 5G (5th generation) communications network emerge, and user equipment (User Equipment, UE) may maintain a mobile data connection in a process of implementing a call service, thereby enriching opportunities for rendering advertisement content on the UE. For example, the user equipment may be triggered, in a dialing process, to play an advertisement video, and even the user equipment may be triggered, in a call process, to display advertisement content.

In the conventional technology, when the UE is triggered to render advertisement content, an "inappropriate" case often occurs. For example, the advertisement content is excessively long with respect to a call time, the advertisement content is unrelated to a user, or advertisement rendering causes interference to a call. In this case, user experience is affected, an advertising effect is reduced, and network resources of a telecommunications operator are wasted. Consequently, utilization of network resources of the telecommunications operator is reduced.

### SUMMARY

In view of this, a method for rendering media content needs to be provided, to improve utilization of network resources of a telecommunications operator.

According to a first aspect, an embodiment of this application provides a method for rendering media content. The method includes: receiving call signaling of a call service from a call session control device; obtaining call context information based on the call signaling, where the call context information includes information used to describe progress of user equipment in the call service in a call service process; and enabling, based on the call context information, the user equipment to render media content.

In the method, the user equipment may be enabled, based on call context, to render media content. In comparison with a conventional method in which media content that is relatively fixed and that is unrelated to call context is rendered, in the method, acceptance of a user to media content rendered in the call process may be improved, to improve utilization of network resources of a telecommunications operator.

In a possible solution, the enabling, based on the call context information, the user equipment to render media content includes: triggering, based on the call context information, the user equipment to render target media content on a target rendering occasion.

In a possible solution, the call context information includes call status information of the user equipment, and the call status information includes a call status of the user equipment, a start time point of the call status, and a theoretical end time point of the call status; the obtaining call context information based on the call signaling includes: determining the call status of the user equipment based on a signaling code or a status code in the call signaling; and the triggering, based on the call context information, the user equipment to render target media content on a target rendering occasion includes: obtaining the start time point of the call status, setting a start time point of the target rendering occasion based on the start time point of the call status, and setting an end time point of the target rendering occasion based on the theoretical end time point.

In a possible solution, the triggering, based on the call context information, the user equipment to render target media content on a target rendering occasion further includes: selecting the target media content from media content whose rendering duration is not greater than theoretical duration of the call status, where the theoretical duration is duration from the start time point to the theoretical end time point; or determining a call phase of the user equipment based on the call status, and selecting the target media content from media content that is in no audio conflict with that in the call phase; or determining a call phase of the user equipment based on the call status, selecting the target media content from media content that is in an audio conflict with that in the call phase, and generating an audio conflict mark or an audio mark, so that when the user equipment is triggered to render the target media content, rendering of an audio part in the target media content is not triggered.

In the solution, the advertisement content and/or the rendering occasion are/is determined based on the call status information of the user equipment, so that impact of rendering of the advertisement content on call experience may be reduced to some extent. In this way, acceptance of the user to the advertisement content in the call process may be improved, and an advertising effect may be improved, to improve utilization of network resources of the operator.

In a possible solution, the call context information includes existing call duration of the call service; the obtaining call context information based on the call signaling includes: determining that the call signaling is callee pickup call signaling; and calculating the existing call duration of the call service based on a timestamp in the call signaling and a current time point; and the triggering, based on the call context information, the user equipment to render target media content on a target rendering occasion includes: determining target rendering duration based on the existing call duration, and selecting the target media content from media content whose rendering duration is not greater than the target rendering duration.

In a possible solution, the triggering, based on the call context information, the user equipment to render target media content on a target rending occasion further includes: setting a start time point of the target rendering occasion based on the current time point, and setting an end time point of the target rendering occasion based on the existing call duration.

In the solution, the time length and/or the rendering occasion of the advertisement content are/is determined based on the existing call duration, so that there is a positive correlation between the rendering duration of the advertisement content and actual call duration. In this way, acceptance of the user to the advertisement content may be improved to some extent, and an advertising effect may be improved, to improve utilization of network resources of the operator.

In a possible solution, the call service occurs between the user equipment and an interactive voice response IVR device, the call context information includes key sequence information of the user equipment, the key sequence information includes a key sequence of the user equipment, a start time point of a voice service corresponding to the key sequence, and a theoretical end time point of the voice service, the key sequence includes keys that are entered in a time sequence by a user by using the user equipment in the call service process, and the obtaining call context information based on the call signaling includes: obtaining the key sequence information based on the call signaling and information sent by the IVR device.

In a possible solution, the triggering, based on the call context information, the user equipment to render target media content on a target rendering occasion includes: setting a start time point of the target rendering occasion based on the start time point of the voice service corresponding to the key sequence, and setting an end time point of the target rendering occasion based on the theoretical end time point of the voice service; and determining the target media content based on content of the voice service corresponding to the key sequence.

In the solution, the advertisement content and/or the rendering occasion are/is determined based on the key sequence of the user equipment, so that there may be a higher correlation between rendering of the advertisement content and a user operation. In this way, the user pays more attention to the advertisement content, and an advertisement conversion rate is increased, to improve utilization of network resources of the operator.

In a possible solution, the call context information further includes predicted call duration of the call service, and the obtaining call context information based on the call signaling further includes: obtaining, based on the call signaling, a historical call duration record of the user corresponding to the user equipment; and determining the predicted call duration based on the historical call duration record.

In a possible solution, the triggering, based on the call context information, the user equipment to render target media content on a target rendering occasion further includes: setting the start time point and the end time point of the target rendering occasion based on the current time point and the predicted call duration; and determining the target rendering duration based on the predicted call duration, and selecting the target media content from the media content whose rendering duration is not greater than the target rendering duration.

In the solution, the advertisement content and/or the rendering occasion are/is determined based on the predicted call duration, so that there is a positive correlation between the rendering duration of the advertisement content and the predicted call duration. In this way, acceptance of the user to the advertisement content may be improved to some extent, and an advertising effect may be improved, to improve utilization of network resources of the operator.

In a possible solution, the call context information further includes plan information or account information corresponding to the user equipment, the plan information includes a plan balance or a remaining plan validity period, the account information includes an account balance, and the obtaining call context information based on the call signaling further includes: obtaining the plan information from a home subscriber server HSS or a business support system BSS based on the call signaling, or obtaining the account information from a BSS based on the call signaling; or obtaining the plan information or the account information from the call signaling; and the triggering, based on the call context information, the user equipment to render target media content on a target rendering occasion further includes: selecting the target media content from media content that matches the plan information or the account information.

In a possible solution, the triggering, based on the call context information, the user equipment to render target media content on a target rendering occasion further includes: determining urgency of plan renewal or account recharge based on the plan balance or the remaining plan validity period or based on the account balance, and determining the target rendering occasion based on the urgency.

In the solution, the advertisement content and the rendering occasion in the call service process are determined based on the plan information/account information of the user equipment. In this way, a case in which a communications service of the user is interrupted due to costs may be avoided in a timely manner, to help improve user experience and improve utilization of network resources of the operator.

In a possible solution, the call context information further includes location information of the user equipment, and the obtaining call context information based on the call signaling includes: obtaining the location information of the user equipment from the call signaling; or obtaining the location information of the user equipment from a home subscriber server HSS based on the call signaling; and the triggering, based on the call context information, the user equipment to render target media content on a target rendering occasion further includes: determining freshness or frequency of the user equipment at a location corresponding to the location information, and determining the target rendering occasion based on the freshness or the frequency; and selecting the target media content from media content related to a business place related to the location information.

In a possible solution, the triggering the user equipment to render target media content on a target rendering occasion includes: negotiating a media channel with the user equipment by using the call signaling of the call service; and sending a part or all of data in the target media content to the user equipment through the media channel at the start time point of the target rendering occasion.

In the solution, the advertisement content and/or the rendering occasion are/is determined based on the location information of the user equipment, so that immersive experience may be provided for the user. In this way, the user pays more attention to the advertisement content, and an advertisement conversion rate is increased, to improve utilization of network resources of the operator.

In a possible solution, the triggering the user equipment to render target media content on a target rendering occasion further includes: stopping, at the end time point of the target rendering occasion, sending the data in the target media content or data in the audio part in the target media content to the user equipment through the media channel.

According to a second aspect, an embodiment of this application provides a media application system. The system includes a call context management module, configured to: receive call signaling of a call service from a call session control device; obtain call context information based on the call signaling; and enable, based on the call context information, user equipment to render media content.

In a possible solution, the media application system further includes a media rendering module; the call context management module is further configured to indicate, based on the call context information, the media rendering module to trigger the user equipment to render target media content on a target rendering occasion; and the media rendering module is configured to trigger, based on an indication of the call context management module, the user equipment to render the target media content on the target rendering occasion.

In a possible solution, the media application system further includes a rendering occasion determining module and a module for determining to-be-rendered content; the call context management module is further configured to: send the call context information to the rendering occasion determining module and receive the target rendering occasion from the rendering occasion determining module, and/or send the call context information to the module for determining to-be-rendered content and receive information about the target media content from the module for determining to-be-rendered content; and indicate, on the target rendering occasion, the media rendering module to trigger the user equipment to render the target media content; the rendering occasion determining module is configured to: receive the call context information from the call context management module, determine the target rendering occasion based on the call context information, and send the target rendering occasion to the call context management module; and the module for determining to-be-rendered content is configured to: receive the call context information from the call context management module, determine the target media content based on the call context information, and send the information about the target media content to the call context management module.

In a possible solution, the call context information includes call status information of the user equipment; the call context management module is further configured to determine a call status based on a signaling code or a status code in the call signaling; the rendering occasion determining module is further configured to: determine a start time point and a theoretical end time point of the call status, set a start time point of the target rendering occasion based on the start time point, and set an end time point of the target rendering occasion based on the theoretical end time point; and the module for determining to-be-rendered content is further configured to: select the target media content from media content whose rendering duration is not greater than theoretical duration of the call status; or determine a call phase of the user equipment based on the call status, and select the target media content from media content that is in no audio conflict with that in the call phase; or determine a call phase of the user equipment based on the call status, select the target media content from media content that is in an audio conflict with that in the call phase, and generate an audio conflict mark or an audio mark, so that when the user equipment is triggered to render the target media content, rendering of an audio part in the target media content is not triggered.

In a possible solution, the call context information includes existing call duration of the call service; the call context management module is further configured to: determine that the call signaling is callee pickup call signaling; and calculate the existing call duration of the call service based on a timestamp in the call signaling and a current time point; the rendering occasion determining module is further configured to: set a start time point of the target rendering occasion based on the current time point, and set an end time point of the target rendering occasion based on the existing call duration; and the module for determining to-be-rendered content is further configured to: determine target rendering duration based on the existing call duration, and select the target media content from media content whose rendering duration is not greater than the target rendering duration.

In a possible solution, the call service occurs between the user equipment and an interactive voice response IVR device, the call context information includes key sequence information of the user equipment; the call context management module is further configured to obtain the key sequence information based on the call signaling and information sent by the IVR device; the rendering occasion determining module is further configured to: set a start time point of the target rendering occasion based on a start time point of a voice service corresponding to a key sequence, and set an end time point of the target rendering occasion based on a theoretical end time point of the voice service; and the module for determining to-be-rendered content is further configured to determine the target media content based on content of the voice service corresponding to the key sequence.

In a possible solution, the call context information includes predicted call duration of the call service; the call context management module is further configured to: obtain, based on the call signaling, a historical call duration record of a user corresponding to the user equipment; and determine the predicted call duration based on the historical call duration record; the rendering occasion determining module is further configured to set a start time point and an end time point of the target rendering occasion based on a current time point and the predicted call duration; and the module for determining to-be-rendered content is further configured to: determine target rendering duration based on the predicted call duration, and select the target media content from media content whose rendering duration is not greater than the target rendering duration.

In a possible solution, the call context information includes plan information or account information corresponding to the user equipment; the call context management module is further configured to: obtain the plan information from a home subscriber server HSS or a business support system BSS based on the call signaling, or obtain the account information from a BSS; or obtain the plan information or the account information from the call signaling; the rendering occasion determining module is further configured to: determine urgency of plan renewal or account recharge based on a plan balance or a remaining plan validity period or based on an account balance, and determine the target rendering occasion based on the urgency; and the module for determining to-be-rendered content is further configured to select the target media content from media content that matches the plan information or the account information.

In a possible solution, the call context information includes location information of the user equipment; the call context management module is further configured to: obtain the location information of the user equipment from the call signaling; or obtain the location information of the user equipment from a home subscriber server HSS based on the call signaling; the module for determining to-be-rendered content is further configured to select the target media content from media content related to a business place related to the location information; and the rendering occasion determining module is further configured to: determine freshness or frequency of the user equipment at a location corresponding to the location information, and determine the target rendering occasion based on the freshness or the frequency.

In a possible solution, the media application system includes a media application device, and all of the call context management module, the rendering occasion determining module, the module for determining to-be-rendered content, and the media rendering module are deployed in the media application device.

In a possible solution, the media application system includes a call context management device, a media determining device, and a media rendering device, the call context management module and the rendering occasion determining module are deployed in the call context management device, the module for determining to-be-rendered content is deployed in the media determining device, and the media rendering module is deployed in the media rendering device.

In a possible solution, the media application system includes a call context management device, a media determining device, and a media rendering device, the call context management module is deployed in the call context management device, the module for determining to-be-rendered content and the rendering occasion determining module are deployed in the media determining device, and the media rendering module is deployed in the media rendering device.

According to a third aspect, an embodiment of this application provides a method for rendering media content. The method is executed by a call context management device, and the method includes: receiving call signaling of a call service from a call session control device; obtaining call context information based on the call signaling; and indicating, based on the call context information, a media rendering device to trigger user equipment to render target media content on a target rendering occasion.

In a possible solution, the call context information includes call status information of the user equipment, and the obtaining call context information based on the call signaling includes: determining a call status based on a signaling code or a status code in the call signaling.

In a possible solution, the call context information includes existing call duration of the call service, and the obtaining call context information based on the call signaling includes: determining that the call signaling is callee pickup call signaling; and calculating the existing call duration of the call service based on a timestamp in the call signaling and a current time point.

In a possible solution, the call service occurs between the user equipment and an interactive voice response IVR device, the call context information includes key sequence information of the user equipment, and the obtaining call context information based on the call signaling includes: obtaining the key sequence information based on the call signaling and information sent by the IVR device.

In a possible solution, the call context information further includes predicted call duration of the call service, and the obtaining call context information includes: obtaining, based on the call signaling, a historical call duration record of a user corresponding to the user equipment; and obtaining the predicted call duration based on the historical call duration record.

In a possible solution, the call context information further includes plan information or account information corresponding to the user equipment, and the obtaining call context information based on the call signaling includes: obtaining the plan information from a home subscriber server HSS or a business support system BSS based on the call signaling, or obtaining the account information from a BSS; or obtaining the plan information or the account information from the call signaling.

In a possible solution, the call context information further includes location information of the user equipment, and the obtaining call context information based on the call signaling includes: obtaining the location information of the user equipment from the call signaling; or obtaining the location information of the user equipment from a home subscriber server HSS based on the call signaling.

According to a fourth aspect, an embodiment of this application provides a method for rendering media content. The method is executed by a media determining device. The method includes: receiving call context information from a call context management device; determining a target rendering occasion and/or target media content based on the call context information; and sending the target rendering occasion and/or information about the target media content to the call context management device, so that the call context management device triggers user equipment to render the target media content on the target rendering occasion.

In a possible solution, the call context information includes call status information of the user equipment, and the determining a target rendering occasion and/or target media content based on the call context information includes: setting a start time point of the target rendering occasion based on a start time point of a call status, and setting an end time point of the target rendering occasion based on a theoretical end time point; and/or selecting the target media content from media content whose rendering duration is not greater than theoretical duration of the call status; or determining a call phase of the user equipment based on the call status, and selecting the target media content from media content that is in no audio conflict with that in the call phase; or determining a call phase of the user equipment based on the call status, selecting the target media content from media content that is in an audio conflict with that in the call phase, and generating an audio conflict mark or an audio mark, so that when the user equipment is triggered to render the target media content, rendering of an audio part in the target media content is not triggered.

In a possible solution, the call context information includes existing call duration of a call service, and the determining a target rendering occasion and/or target media content based on the call context information includes: setting a start time point of the target rendering occasion based on a current time point, and setting an end time point of the target rendering occasion based on the existing call duration; and/or determining target rendering duration based on the existing call duration, and selecting the target media content from media content whose rendering duration is not greater than the target rendering duration.

In a possible solution, a call service occurs between the user equipment and an interactive voice response IVR device, the call context information includes key sequence information of the user equipment, and the determining a target rendering occasion and/or target media content based on the call context information includes: setting a start time point of the target rendering occasion based on a start time point of a voice service corresponding to a key sequence, and setting an end time point of the target rendering occasion based on a theoretical end time point of the voice service; and/or determining the target media content based on content of the voice service corresponding to the key sequence.

In a possible solution, the call context information further includes predicted call duration of the call service, and the determining a target rendering occasion and/or target media content based on the call context information includes: setting the start time point and the end time point of the target rendering occasion based on the current time point and the predicted call duration; and/or determining the target rendering duration based on the predicted call duration, and selecting the target media content from the media content whose rendering duration is not greater than the target rendering duration.

In a possible solution, the call context information further includes plan information or account information corresponding to the user equipment, and the determining a target rendering occasion and/or target media content based on the call context information includes: determining urgency of plan renewal or account recharge based on a plan balance or a remaining plan validity period or based on an account balance, and determining the target rendering occasion based on the urgency; and/or selecting the target media content from media content that matches the plan information or the account information.

In a possible solution, the call context information further includes location information of the user equipment, and the determining a target rendering occasion and/or target media content based on the call context information includes: determining freshness or frequency of the user equipment at a location corresponding to the location information, and determining the target rendering occasion based on the freshness or the frequency; and/or selecting the target media content from media content related to a business place related to the location information.

According to a fifth aspect, an embodiment of this application provides a call context management device. The device includes a processor and a memory. The memory is configured to store program instructions. The processor is configured to invoke and execute the program instructions stored in the memory, so that the call context management device performs the method for rendering media content according to any one of the third aspect and the possible solutions of the third aspect.

According to a sixth aspect, an embodiment of this application provides a computer-readable storage medium. The medium includes instructions, and when the instructions are run on a computer, the computer is enabled to perform the method for rendering media content according to any one of the third aspect and the possible solutions of the third aspect.

According to a seventh aspect, an embodiment of this application provides a media determining device. The device includes a processor and a memory. The memory is configured to store program instructions. The processor is configured to invoke and execute the program instructions stored in the memory, so that the media determining device performs the method for rendering media content according to any one of the fourth aspect and the possible solutions of the fourth aspect.

According to an eighth aspect, an embodiment of this application provides a computer-readable storage medium that includes instructions. When the instructions are run on a computer, the computer is enabled to perform the method for rendering media content according to any one of the fourth aspect and the possible solutions of the fourth aspect.

### BRIEF DESCRIPTION OF DRAWINGS

FIG. 1A is an architectural diagram of a first communications system according to an embodiment of this application;
FIG. 1B is an architectural diagram of a second communications system according to an embodiment of this application;
FIG. 1C is an architectural diagram of a third communications system according to an embodiment of this application;
FIG. 2A is a diagram of a first method procedure for rendering media content in a call process according to an embodiment of this application;
FIG. 2B(1) and FIG. 2B(2) are a diagram of a second method procedure for rendering media content in a call process according to an embodiment of this application;
FIG. 2C is a diagram of a third method procedure for rendering media content in a call process according to an embodiment of this application;
FIG. 3 is an architectural diagram of a fourth communications system according to an embodiment of this application;
FIG. 4A(1) and FIG. 4A(2) are a diagram of a first method procedure for rendering advertisement content in a call process according to an embodiment of this application;
FIG. 4B(1) and FIG. 4B(2) are a diagram of a second method procedure for rendering advertisement content in a call process according to an embodiment of this application;
FIG. 4C(1) and FIG. 4C(2) are a diagram of a third method procedure for rendering advertisement content in a call process according to an embodiment of this application;
FIG. 4D(1) and FIG. 4D(2) are a diagram of a fourth method procedure for rendering advertisement content in a call process according to an embodiment of this application;
FIG. 4E(1), FIG. 4E(2), and FIG. 4E(3) are a diagram of a fifth method procedure for rendering advertisement content in a call process according to an embodiment of this application;
FIG. 4F(1) and FIG. 4F(2) are a diagram of a sixth method procedure for rendering advertisement content in a call process according to an embodiment of this application;
FIG. 5 is a diagram of a hardware structure of a media application device, a call context management device, or a media determining device according to an embodiment of this application;
FIG. 6 is a schematic diagram of a logical structure of a call context management device according to an embodiment of this application; and
FIG. 7 is a schematic diagram of a logical structure of a media determining device according to an embodiment of this application.

### DESCRIPTION OF EMBODIMENTS

The following describes technical solutions in the embodiments of this application with reference to accompanying drawings in the embodiments of this application. In the description of this application, unless otherwise specified, "/" indicates an "or" relationship between associated objects. For example, A/B may represent A or B. "And/Or" describes an association relationship for describing associated objects, and represents that three relationships may exist. For example, "A and/or B" may represent the following three cases: Only A exists, both A and B exist, and only B exists. A and B may be in a singular form or a plural form.

To help understand the embodiments of this application, several concepts are first explained.

A call service is a voice call service or a video call service that is implemented between user equipment (refer to the following description of user equipment 12) that participates as a caller or a callee and another call device (refer to the following description of a call device 13) through a communications network, for example, a voice call service implemented by the user equipment when dialing a mobile phone number, an office fixed-line phone number, or a customer service center number, or for another example, a voice call service implemented by the user equipment when accepting a call from a mobile phone, an office fixed-line phone, or a customer service center.

A call service process refers to an entire time range from dialing of a party participating in a call service to end (termination or the like) of the call service, and sometimes is also referred to as a "call process" or a "call service period".

Call context information includes information used to describe progress of user equipment in a call service in a call service process, for example, call status information, existing call duration, and entered key sequence information of the user equipment, which all reflect the progress of the user equipment in the call service process, and may further include information about an environment in which the user equipment is located in the call service process, for example, predicted call duration, plan information (for example, network service plan information and tariff plan information), and location information. The predicted call duration, the plan information, and account information reflect a virtual environment in which the user equipment is located in the call service process, and the location information reflects a physical environment in which the user equipment is located in the call service process.

A target rendering occasion is an occasion for rendering media content on user equipment (where may be specifically on an interface of a phone application program in the user equipment or on an auxiliary interface of an interface of a phone application program, for example, a pop-up floating window) in a call service process, and may be a timeslot or a time period that includes a start time point and an end time point, or may be a start time point and rendering duration, or may be only a start time point (in this case, rendering duration is determined based on duration in which the media content can be rendered, for example, total duration of video content). The start time point is a time point at which the media content is started to be rendered, and is in the call service process. The end time point is a time point at which rendering of the media content is stopped, and based on a determining status, may be in the call service process or after a time point at which a call service ends (hangs up).

Target media content is media content suitable for being rendered on user equipment in a call service. From a perspective of file format, the target media content may be video content (correspondingly, "rendering the target media content" means playing the video content on the user equipment), may be a picture (correspondingly, "rendering the target media content" means displaying a picture on the user equipment), for example, GIF (Graphics Interchange Format, graphics interchange format), or may be multimedia content such as an HTML (HyperText Markup Language, hypertext markup language) page (correspondingly, "rendering the target media content" means displaying the HTML page on the user equipment). From a perspective of application scenario or function, the target media content may be media content for a customized alerting tones (Customized Alerting Tones, CAT, commonly referred to as "customized alerting tones"), may be media content for a customized ringing signal (Customized Ringing Signal, CRS, commonly referred to as "customized ringing signal") service, may be public service news media content, or may be advertising media content. From a perspective of quantity, the target media content may include one piece of media content or a plurality of pieces of media content. For the target media content, a file format, a function or a use, and a quantity are not limited in the embodiments of this application.

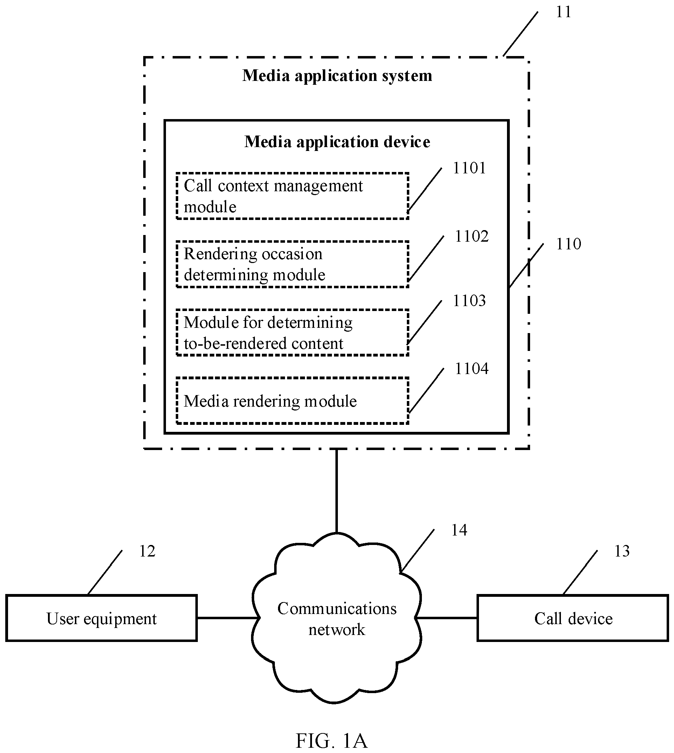

FIG. 1A is an architectural diagram of a first communications system according to an embodiment of this application. A media application system 11, a media application device 110, user equipment 12, and a call device 13 are included. These entities are connected by using a communications network 14, and are separately described below.

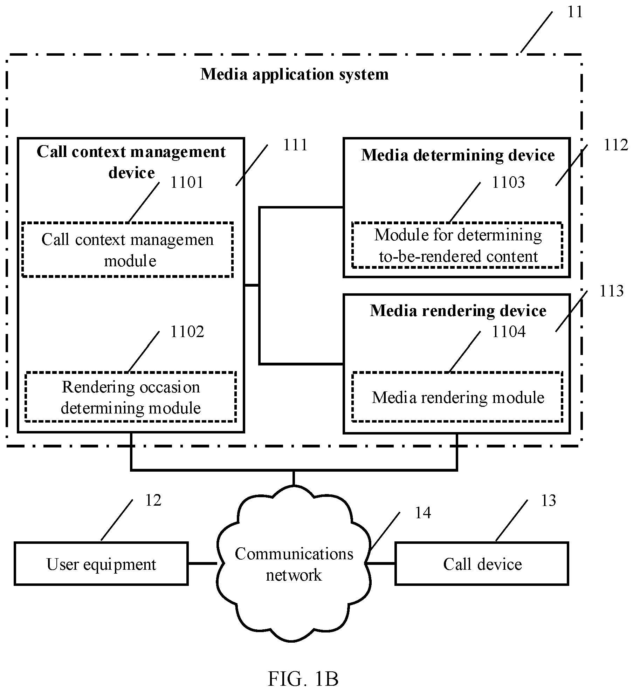

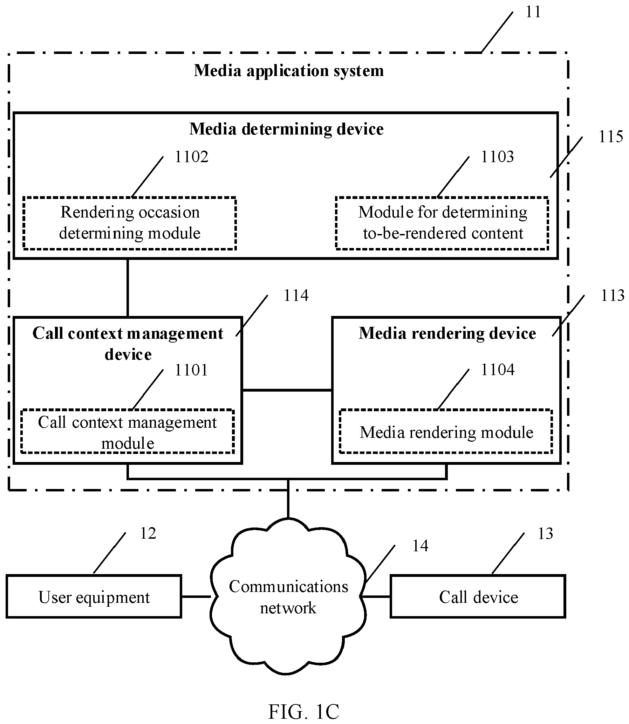

Functions of the media application system 11 may be deployed in a single device, for example, deployed in the media application device 110, or may be respectively deployed in a plurality of devices, as shown in FIG. 1B and FIG. 1C. The system is configured to: obtain call context information of the user equipment 12, and enable, based on the call context information, the user equipment 12 to render media content. For details, refer to description of the media application device 110.

The media application device 110 is connected to the user equipment 12 and the call device 13 by using the communications network 14. To trigger the user equipment 12 to render target media content on a target rendering occasion, the media application device 110 obtains the call context information of the user equipment 12 in a process of implementing a call service between the user equipment 12 and the call device 13, and then enables, based on the call context information, the user equipment 12 to render the media content. Specifically, the media application device 110 determines the target rendering occasion and/or the target media content based on the call context information, and then triggers the user equipment 12 to start to render the target media content at a start time point of the target rendering occasion. Optionally, the media application device 110 further triggers, at an end time point of the target rendering occasion, the user equipment 12 to stop rendering the target media content or stop rendering an audio part in the target media content.

Main functions of the media application device 110 may be distributed in four functional modules: a call context management module 1101, a rendering occasion determining module 1102, a module 1103 for determining to-be-rendered content, and a media rendering module 1104, which are separately described below.

The call context management module 1101 is configured to: interact with a device in the communications network 14 and a telecommunications operator operation support management device (not shown in FIG. 1A), to obtain the call context information of the user equipment 12, and enable, based on the call context information, the user equipment 12 to render the media content. Specifically, the call context management module 1101 receives call signaling of the call service from a call session control device in the communications network 14, and obtains the call context information based on the call signaling. Specifically, the call context management module 1101 sends the call context information to the rendering occasion determining module 1102 and receives the target rendering occasion from the rendering occasion determining module 1102, and/or sends the call context information to the module 1103 for determining to-be-rendered content and receives information about the target media content from the module for determining to-be-rendered content, and then indicates the media rendering module 1104 to trigger the user equipment 12 to render the target media content on the target rendering occasion. Specifically, the call context management module 1101 indicates, at the start time point of the target rendering occasion, the media rendering module 1104 to trigger the user equipment 12 to start to render the target media content. Optionally, the call context management module 1101 further indicates, at the end time point of the target rendering occasion, the media rendering module 1104 to trigger the user equipment 12 to stop rendering the target media content or stop rendering the audio part in the target media content.

The rendering occasion determining module 1102 is configured to: determine the target rendering occasion based on the call context information provided by the call context management module 1101, and provide or send the target rendering occasion to the call context management module 1101.

In comparison with a rendering occasion that is relatively fixed and that is conventionally determined based on a willingness of an advertiser or a telecommunications operator, there is a higher probability that the rendering occasion determined in such a manner is accepted by an end user because experience of the end user is considered. It should be understood that an actual rendering time range of the target media content may be less than a time range corresponding to the determined target rendering occasion. For example, the user turns off a screen or hangs up a call before the end time point of the target rendering occasion arrives, and consequently rendering of the media content is ended in advance. It should be noted that:
The module 1103 for determining to-be-rendered content is configured to: determine the target media content based on the call context information received from the call context management module 1101, and send the information about the target media content to the call context management module 1101.

In comparison with media content that is relatively fixed and that is conventionally determined based on a willingness of an advertiser or a telecommunications operator, there is a higher probability that the target media content determined in such a manner is accepted by an end user because a requirement of the end user is considered.

The media rendering module 1104 is configured to trigger, based on an indication of the call context management module 1101, the user equipment 12 to render the target media content, including triggering the user equipment 12 to start to render the target media content, and optionally, further including triggering the user equipment 12 to stop rendering the target media content.

The user equipment 12 is connected to the call device 13 and the media application system 11 (specifically, the media application device 110) by using the communications network 14, may initiate a call service with the call device 13 as a caller, or may accept, as a callee, a call service initiated by the call device 13, and in the process of implementing the call service, may receive the target media content from the media application system 11 and render the target media content on the target rendering occasion. The user equipment 12 is a device of an end user, has a capability of rendering media content, and may be user equipment (user equipment, UE) defined in a 3GPP (3rd Generation Partnership Project, 3rd generation partnership project) standard specification, a handheld device, a vehicle-mounted device, a wearable device, a computing device, a mobile phone (mobile phone), a tablet computer, a computer with a wireless transceiver function, a virtual reality (virtual reality, VR) terminal device, an augmented reality (augmented reality, AR) terminal device, or the like. It should be understood that in actual application, the communications system shown in FIG. 1A, FIG. 1B, or FIG. 1C may include more user equipment.

The call device 13 is connected to the user equipment 12 and the media application system 11 (specifically, the media application device 110) by using the communications network 14, and may initiate a call service with the user equipment 12 as a caller, or may accept, as a callee, a call service initiated by the user equipment 12. The call device 13 may be a device that has both a call service capability and a capability of rendering media content, for example, a device similar to the user equipment 12, may be a device that has a call service capability but does not have a capability of rendering media content, for example, a conventional office fixed-line phone, or may be a device that has a call service capability and a capability of responding to key input of the other party in a process of implementing a call service but does not have a capability of rendering media content, for example, an interactive voice response (Interactive Voice Response, IVR) device. When the call device 13 is an IVR device, the call device 13 may obtain, from an RTP (Real-time Transport Protocol, real-time transport protocol) media stream established with the user equipment 12, key information entered by the user equipment 12 in a process of interacting with the IVR device, to learn of a key sequence entered by an end user on a side of the user equipment 12, and provide the key sequence for the media application system 11 (specifically, the call context management module 1101 in the media application device 110), so that the media application system 11 forms the call context information based on the key sequence, and uses the call context information as a basis for determining the target rendering occasion and/or the target media content. The key sequence includes keys that are entered in a time sequence by the user by using the user equipment in the call service process. It should be understood that in actual application, the communications system shown in FIG. 1A, FIG. 1B, or FIG. 1C may include more call devices.

In the communications system corresponding to FIG. 1A, the functions of the media application system 11 are centrally deployed in one physical device (namely, the media application device 110), to improve cohesiveness (cohesiveness) of the media application system 11, so as to improve performance of the system.

Alternatively, the functions of the media application system 11 may be deployed in a plurality of physical devices, for example, may be deployed in a manner shown in FIG. 1B or FIG. 1C.

FIG. 1B is an architectural diagram of a second communications system according to an embodiment of this application. A media application system 11 includes a call context management device 111, a media determining device 112, and a media rendering device 113. The call context management device 111 includes the foregoing call context management module 1101 and the foregoing rendering occasion determining module 1102. The media determining device 112 includes the foregoing module 1103 for determining to-be-rendered content. The media rendering device 113 includes the foregoing media rendering module 1104.

In an application scenario, the call context management device 111 may be provided by a telecommunications operator, and the media determining device 112 may be provided by an advertiser or an advertisement platform, so that the advertiser or the advertisement platform has a right of independently determining to-be-rendered media content (for example, advertising media content). In this way, a service requirement of the advertiser may be better met, and performance burden on the telecommunications operator may be reduced.

FIG. 1C is an architectural diagram of a third communications system according to an embodiment of this application. A media application system 11 includes a call context management device 114, a media determining device 115, and a media rendering device 113. The call context management device 114 includes the foregoing call context management module 1101. The media determining device 115 includes the foregoing module 1103 for determining to-be-rendered content and the foregoing rendering occasion determining module 1102. The media rendering device 113 includes the foregoing media rendering module 1104.

In comparison with FIG. 1B, in the deployment manner in FIG. 1C, greater control is further exerted on an advertiser, and performance burden on a telecommunications operator is further reduced.

Both the call context management device 111 and the call context management device 114 may be implemented based on a CAT AS (Customized Alerting Tones Application Server, customized alerting tones application server) and/or a CRS AS (Customized Ringing Signal Application Server, customized ringing signal application server) defined in a 3GPP standard specification. The media rendering device 113 may be implemented based on an MRF (Media Resource Function, media resource function) device defined in the 3GPP standard specification. The call media application device 110 may be implemented based on a CAT AS and/or a CRS AS and an MRF device. It should be noted that "implemented based on a device" in the embodiments of this application means that a function newly provided in the embodiments of this application is added based on an existing function of the device.

Based on a deployment policy of the telecommunications operator, the media application system 11 in FIG. 1A to FIG. 1C may be deployed at a location, in the communications network 14, close to the side of the user equipment 12 (to facilitate access to related information about the user equipment 12), may be deployed at a location, in the communications network 14, close to a side of the call device 13 (to facilitate access to related information about the call device 13), or may be deployed at a neutral location in the communications network 14. When the latter two deployment locations are used, the media application system 11 may access related information, for example, subscriber information, plan information, and key input information, on the side of the user equipment 12 through a remote interface or data sharing, or in another manner.

Based on any one of the communications systems shown in FIG. 1A to FIG. 1C, user equipment may be enabled, based on call context, to render media content, that is, the user equipment is enabled, on an occasion that matches the call context, to render media content that matches the call context. In this way, acceptance of an end user to the rendered media content may be improved, and this helps the telecommunications operator implement a media application service such as a customized alerting tones service, a customized ringing signal service, or a customized advertisement service, in a call process, thereby improving utilization of network resources of the telecommunications operator.

Example method procedures that may be implemented based on the communications systems shown in FIG. 1A to FIG. 1C are separately described below.

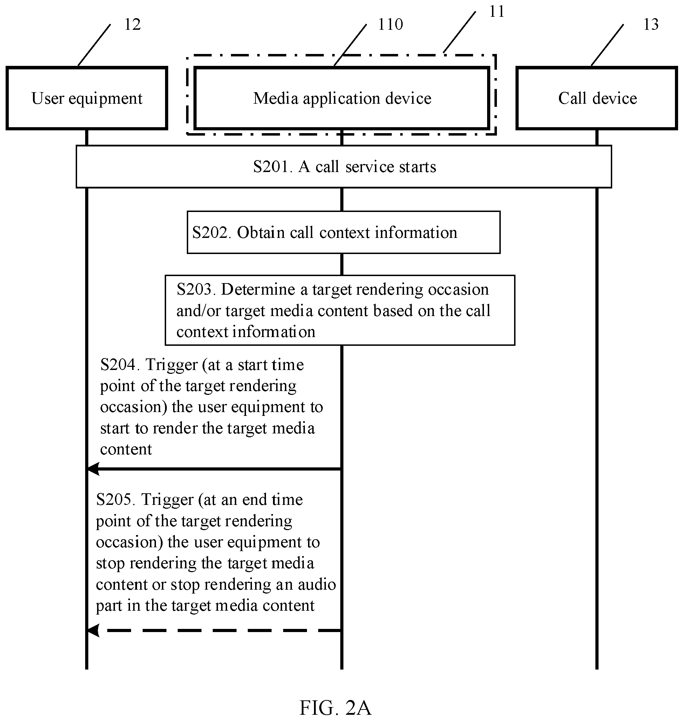

FIG. 2A is a diagram of a first method procedure for rendering media content in a call process according to an embodiment of this application. The method procedure is implemented based on the communications system shown in FIG. 1A. A correspondence between each participant and the entity in FIG. 1A is shown by a reference mark in FIG. 2A. For example, "user equipment" in the method procedure is the user equipment 12 in FIG. 1A. Main steps are as follows:
Step 201: A call service between the user equipment and a call device starts.

Specifically, the user equipment initiates the call service as a caller, or the call device initiates the call service, for example, a voice call service, as a caller.

Step 202: A media application device obtains call context information in a process of implementing the call service.

Specifically, a call context management module 1101 in the media application device interacts with a device (for example, a call session control device) in a communications network 14 and a management device in a telecommunications operator operation support network, to obtain the call context information of the user equipment.

Optionally, the call context information may further include an identifier of the user equipment, information about the other party (namely, another device participating in the call service), and the like.

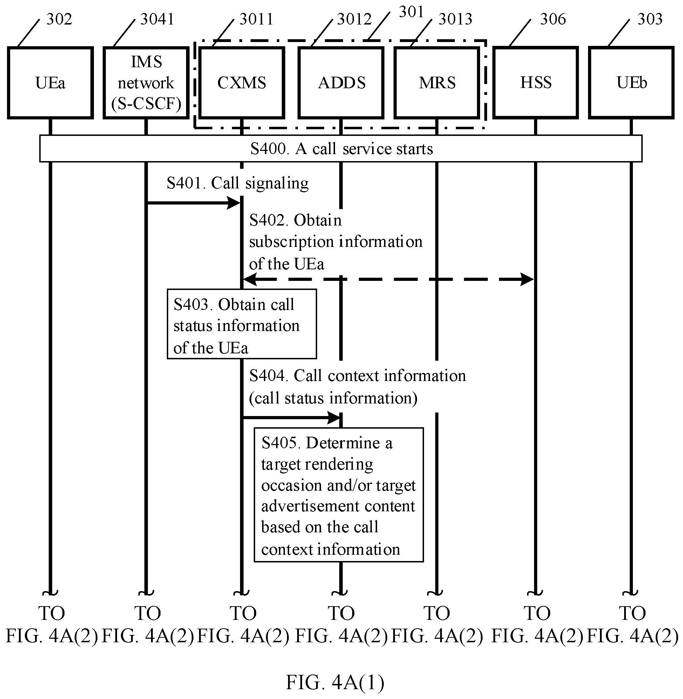

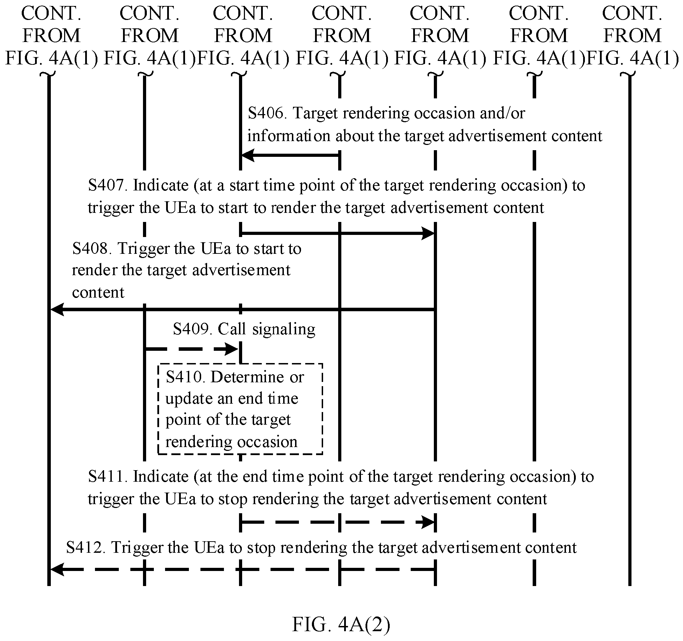

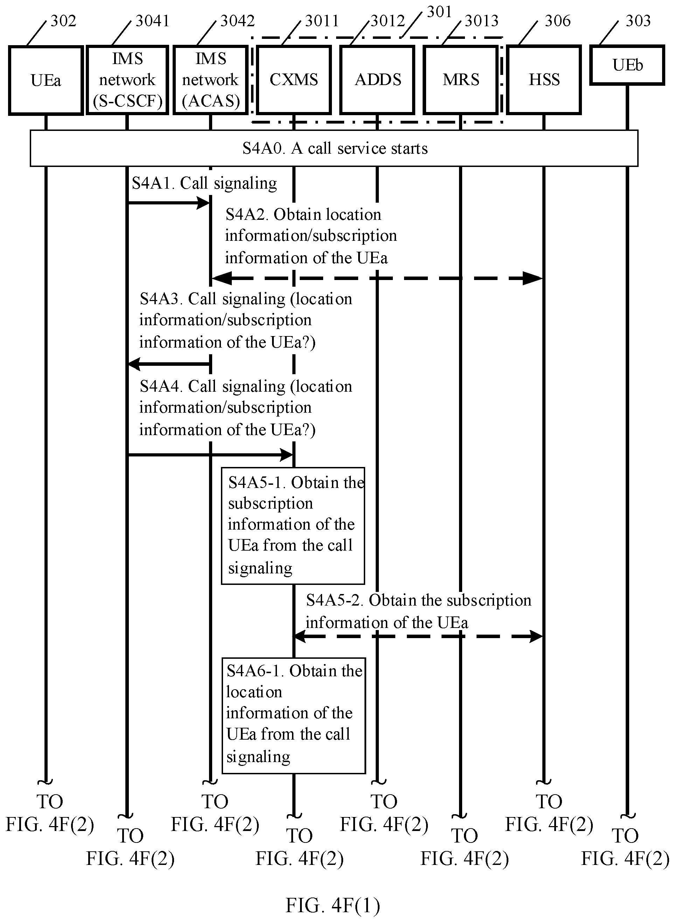

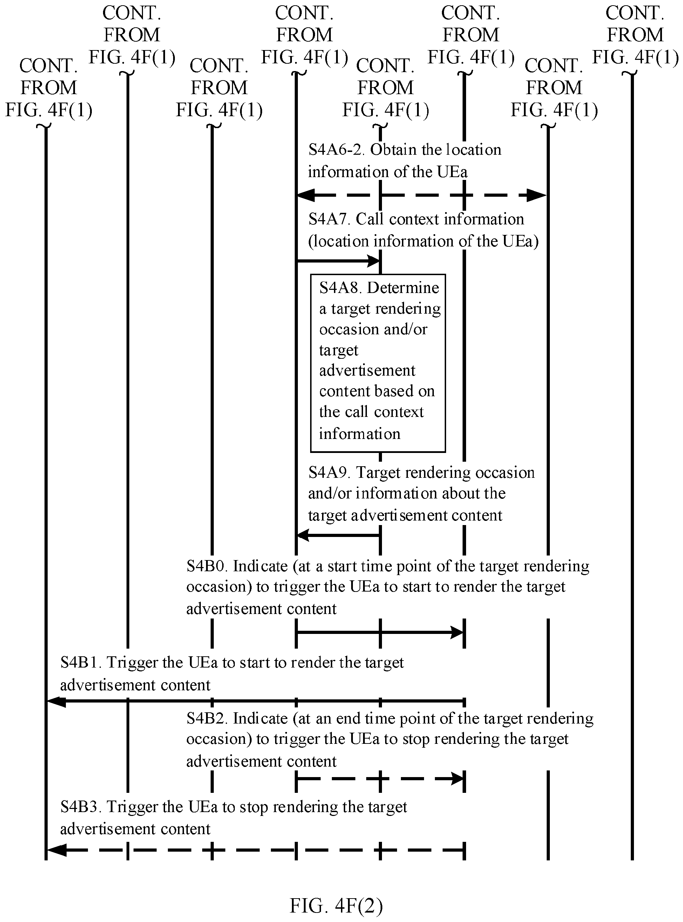

For a method for obtaining the call context information, refer to subsequent embodiments of this application, for example, method procedures corresponding to FIG. 4A(1) and FIG. 4A(2) to FIG. 4F(1) and FIG. 4F(2).

Then, the media application device enables, based on the call context information, the user equipment to render media content. This specifically includes: determining a target rendering occasion and target media content, and triggering the user equipment to render the target media content on the target rendering occasion. The target rendering occasion and/or the target media content are/is determined based on the call context information. A detailed process is described below.

Step 203: The media application device determines the target rendering occasion and/or the target media content based on the call context information.
(1) In a possible scenario, both the target rendering occasion and the target media content need to be determined based on the call context information. In this case, this step includes the following operations:
   The call context management module 1101 provides the call context information for each of a rendering occasion determining module 1102 and a module 1103 for determining to-be-rendered content;
   the rendering occasion determining module 1102 determines the target rendering occasion based on the call context information, and provides the target rendering occasion for the call context management module 1101; and
   the module 1103 for determining to-be-rendered content determines the target media content based on the call context information, and provides information about the target media content for the call context management module 1101.
(2) In another possible scenario, only the target rendering occasion needs to be determined based on the call context information, and the target media content is unrelated to the call context information. In this case, this step includes the following operations:
   The call context management module 1101 provides the call context information for a rendering occasion determining module 1102;
   the rendering occasion determining module 1102 determines the target rendering occasion based on the call context information, and provides the target rendering occasion for the call context management module 1101; and
   a module 1103 for determining to-be-rendered content determines the target media content based on another factor, for example, a policy preset by a telecommunications operator, and provides information about the target media content for the call context management module 1101.
(3) In still another possible scenario, only the target media content needs to be determined based on the call context information, and the target rendering occasion is unrelated to the call context information. In this case, this step includes the following operations:
   The call context management module 1101 provides the call context information for a module 1103 for determining to-be-rendered content;
   a rendering occasion determining module 1102 determines the target rendering occasion based on another factor, for example, a policy preset by a telecommunications operator, and provides the target rendering occasion for the call context management module 1101; and
   a module 1103 for determining to-be-rendered content determines the target media content based on the call context information, and provides information about the target media content for the call context management module 1101.

Optionally, in addition to the call context information, the module 1103 for determining to-be-rendered content may further determine the target media content based on the target rendering occasion. For example, if the target rendering occasion is in a call process, media content that includes no sound is selected.

For how to determine the target rendering occasion and the target media content based on the call context information, further refer to subsequent embodiments of this application, for example, the method procedures corresponding to FIG. 4A(1) and FIG. 4A(2) to FIG. 4F(1) and FIG. 4F(2).

Step 204: The media application device triggers, at a start time point of the target rendering occasion, the user equipment to start to render the target media content.

Specifically, after respectively obtaining the target rendering occasion and the information about the target media content (for example, an identifier or a storage address of the target media content) from the rendering occasion determining module 1102 and the module 1103 for determining to-be-rendered content, the call context management module 1101 in the media application device indicates, at the start time point of the target rendering occasion, a media rendering module 1104 to trigger the user equipment to start to render the target media content, and the media rendering module 1104 triggers, based on an indication of the call context management module 1101, the user equipment to start to render the target media content.

In a possible solution, after enabling the media rendering module 1104 to establish a media channel with the user equipment, the call context management module 1101 indicates, at the start time point of the target rendering occasion, the media rendering module 1104 to start to send data in the target media content to the user equipment through the media channel, so that the user equipment starts to render the target media content, for example, render the target media content on an interface of a phone application program in the user equipment.

In another possible solution, the call context management module 1101 indicates, at the start time point of the target rendering occasion, the media rendering module 1104 to send the information about the target media content (for example, the address of the target media content) to the user equipment, so that the user equipment obtains the target media content from the media rendering module 1104, and starts to render the target media content, for example, render the target media content in a pop-up floating window on an interface of a phone application program in the user equipment. The media rendering module 1104 may send the information about the target media content to the user equipment by using call signaling.

Step 205: The media application device triggers, at an end time point of the target rendering occasion, the user equipment to stop rendering the target media content.

Specifically, the call context management module 1101 in the media application device indicates, at the end time point of the target rendering occasion, the media rendering module 1104 to trigger the user equipment to stop rendering the target media content, and the media rendering module 1104 triggers, based on an indication, the user equipment to stop rendering the target media content or stop rendering an audio part in the target media content.

To trigger the user equipment to stop rendering the target media content or stop rendering the audio part in the target media content, in a possible solution, the media rendering module 1104 stops sending the data in the target media content or data in the audio part in the target media content to the user equipment (may continue to send data in a video part). In another possible solution, the media rendering module 1104 sends a stop instruction to the user equipment, so that the user equipment stops rendering the target media content or stops rendering the audio part in the target media content (in other words, does not play a sound, and continues to play an image part).

It should be noted that step 205 is optional. For example, when the target media content is video content, rendering of the target media content ends when a last picture of the video content on a time axis is played. Therefore, the user equipment may not be triggered to stop rendering the target media content.

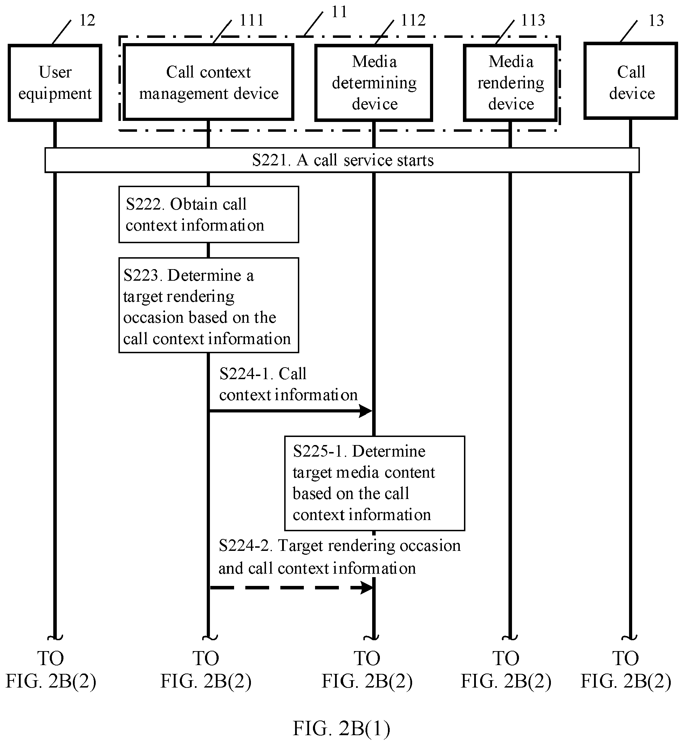

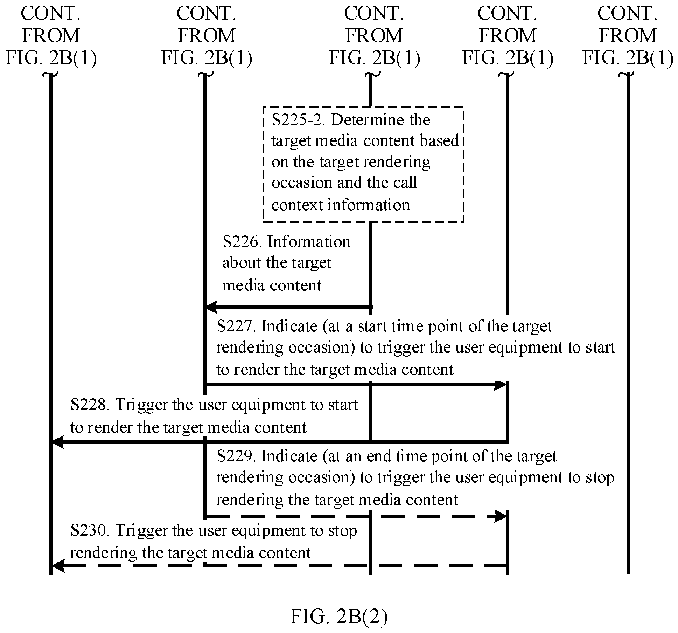

FIG. 2B(1) and FIG. 2B(2) are a diagram of a second method procedure for rendering media content in a call process according to an embodiment of this application. The method procedure is implemented based on the communications system shown in FIG. 1B. A correspondence between each participant and the entity in FIG. 1B is shown by a reference mark in FIG. 2B(1) and FIG. 2B(2). For example, a "call context management device" in the method procedure is the call context management device 111 in FIG. 1B. Main steps are as follows:
Step 221: A call service between user equipment and a call device starts.

For content of this step, refer to related description in step 201.

Step 222: The call context management device obtains call context information in a process of implementing the call service.

For content of this step, refer to related description in step 202.

Then, the call context management device enables, based on the call context information, the user equipment to render media content. This specifically includes: The call context management device obtains a target rendering occasion and target media content, and indicates a media rendering device to trigger the user equipment to render the target media content on the target rendering occasion. The target rendering occasion is determined by the call context management device based on the call context information or another factor (for example, a preset policy), and the target media content is determined by a media determining device based on the call context information or another factor (for example, the preset policy). A detailed process is described below.

Step 223: The call context management device determines the target rendering occasion based on the call context information.

Specifically, a rendering occasion determining module 1102 in the call context management device determines the target rendering occasion based on the call context information. For content of this step, refer to related description in step 203. For how to determine the target rendering occasion based on the call context information, further refer to subsequent embodiments of this application, for example, method procedures corresponding to FIG. 4A(1) and FIG. 4A(2) to FIG. 4F(1) and FIG. 4F(2).

To further obtain information about the target media content, the media determining device may determine the target media content based on the target rendering occasion and (a part or all of content in) the call context information. Details are shown in the following steps 224-1 and 225-1. Alternatively, the media determining device may determine the target media content based on only the call context information. Details are shown in the following steps 224-2 and 225-2.

Step 224-1: The call context management device sends the target rendering occasion and the call context information to the media determining device.

Specifically, the call context management device sends a request message, for example, an HTTP (Hypertext Transfer Protocol, hypertext transfer protocol) request message, to the media determining device. The request message includes the target rendering occasion and (all or a part of the content in) the call context information.

Step 225-1: The media determining device determines the target media content based on the target rending occasion and the call context information.

Specifically, a module 1103 for determining to-be-rendered content in the media determining device receives the request message, obtains the target rendering occasion and the call context information from the request message, and then determines the target media content based on the target rendering occasion and the call context information. For example, whether the target media content may include audio data is determined based on the target rendering occasion, and a content feature of the media content is determined based on a part or all of the content in the call context information.

For how to determine the target media content based on the target rendering occasion and the call context information, further refer to subsequent embodiments of this application, for example, the method procedures corresponding to FIG. 4A(1) and FIG. 4A(2) to FIG. 4F(1) and FIG. 4F(2).

Go to step 226.

Step 224-2: The call context management device sends the call context information to the media determining device.

Specifically, the call context management device sends a request message, for example, an HTTP request message, to the media determining device. The request message includes (all or a part of the content in) the call context information.

Step 225-2: The media determining device determines the target media content based on the call context information.

Specifically, a module 1103 for determining to-be-rendered content in the media determining device receives the request message, obtains the call context information from the request message, and then determines the target media content based on the call context information.

For how to determine the target media content based on the call context information, further refer to subsequent embodiments of this application, for example, the method procedures corresponding to FIG. 4A(1) and FIG. 4A(2) to FIG. 4F(1) and FIG. 4F(2).

Step 226: The media determining device returns the information about the target media content to the call context management device.

Specifically, the module 1103 for determining to-be-rendered content in the media determining device returns the information about the target media content, for example, an identifier of the target media content or a URL (Uniform Resource Locator, uniform resource locator) used to access the target media content, to the call context management device. Corresponding to step 224, a message used to carry the information about the target media content returned by the call context management device to the media determining device is not limited in this embodiment of this application, for example, may be an HTTP response message.

It should be understood that step 224-2 and step 225-2 may be performed before step 223, or may be simultaneously performed with step 223.

Step 227: The call context management device indicates, at a start time point of the target rendering occasion, the media rendering device to trigger the user equipment to start to render the target media content.

Specifically, a call context management module 1101 in the call context management device sends indication information to the media rendering device at the start time point of the target rendering occasion, where the indication information includes the information about the target media content, for example, the identifier of the target media content or the URL of the target media content, so that the media rendering device triggers the user equipment to start to render the target media content.

Step 228: The media rendering device triggers the user equipment to start to render the target media content.

Specifically, a media rendering module 1104 in the media rendering device receives the indication information sent by the call context management device, obtains the information about the target media content from the indication information, and then triggers the user equipment to start to render the target media content. For how to trigger the user equipment to start to render the target media content, refer to related description in step 204.

Step 229: The call context management device indicates, at an end time point of the target rendering occasion, the media rendering device to trigger the user equipment to stop rendering the target media content.

Specifically, the call context management module 1101 in the call context management device sends indication information to the media rendering device at the end time point of the target rendering occasion, so that the media rendering device triggers the user equipment to stop rendering the target media content.

Step 230: The media rendering device triggers the user equipment to stop rendering the target media content.

Specifically, the media rendering module 1104 in the media rendering device receives the indication information sent by the call context management device, and triggers, based on the indication information, the user equipment to stop rendering the target media content. For how to trigger the user equipment to stop rendering the target media content, refer to related description in step 205.

Similar to step 205, step 229 and step 230 are optional. For example, when the target media content is video content, step 229 and step 230 may not be performed.

There is no fixed cooperation relationship or work allocation manner between the call context management device and the media rendering device. In a possible implementation solution, a process in step 227 to step 230 may be implemented in another manner. The call context management device sends the target rendering occasion and the information about the target media content to the media rendering device. The media rendering device independently triggers, at the start time point or the end time point of the target rendering occasion, the user equipment to start to render the target media content or stop rendering the target media content. In this way, it is equivalent to pushing, by the call context management device, a scheduled task to the media rendering device.

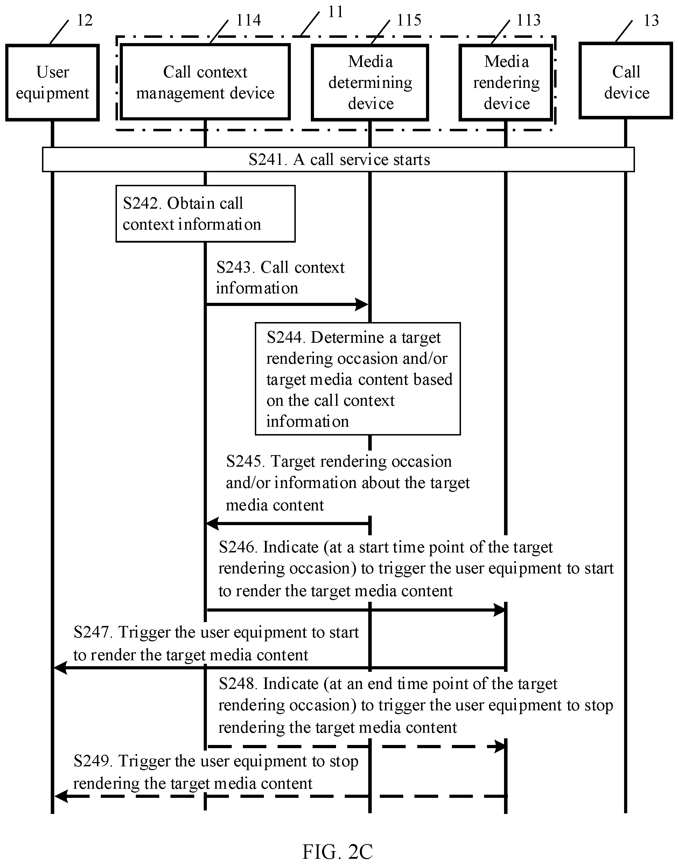

FIG. 2C is a diagram of a third method procedure for rendering media content in a call process according to an embodiment of this application. The method procedure is implemented based on the communications system shown in FIG. 1C. A correspondence between each participant and the entity in FIG. 1C is shown by a reference mark in FIG. 2C. For example, a "media determining device" in the method procedure is the media determining device 115 in FIG. 1C. Main steps are as follows:
Step 241: A call service between user equipment and a call device starts.

For content of this step, refer to related description in step 201.

Step 242: A call context management device obtains call context information in a process of implementing the call service.

For content of this step, refer to related description in step 202.

Step 243: The call context management device sends the call context information to the media determining device.

For content of this step, refer to related description in step 224.

Step 244: The media determining device determines a target rendering occasion and/or target media content based on the call context information.

For content of this step, refer to related description in step 203.

Step 245: The media determining device returns the target rendering occasion and/or information about the target media content to the call context management device.

For content of this step, refer to related description in step 226. A difference is that in this step, the media determining device returns information related to the target rendering occasion in addition to the information about the target media content.

Step 246: The call context management device indicates, at a start time point of the target rendering occasion, a media rendering device to trigger the user equipment to start to render the target media content.

For content of this step, refer to related description in step 227.

Step 247: The media rendering device triggers the user equipment to start to render the target media content.

For content of this step, refer to related description in step 228.

Step 248: The call context management device indicates, at an end time point of the target rendering occasion, the media rendering device to trigger the user equipment to stop rendering the target media content.

For content of this step, refer to related description in step 229.

Step 249: The media rendering device triggers the user equipment to stop rendering the target media content.

For content of this step, refer to related description in step 230.

It should be noted that step 248 and step 249 are optional. For example, when the target media content is video content, step 248 and step 249 may not be performed.

In the method procedures corresponding to FIG. 2A to FIG. 2C, although there are different cooperation relationships or work allocation manners in a media application system, the cooperation relationships or work allocation manners may be used to implement a media application service in a call process, for example, a dynamic alerting tones service, a dynamic ringing signal service, or an advertisement service in a call process.

A method procedure of implementing an advertisement service in a call process is described below by using a work allocation manner corresponding to FIG. 2C as an example. The method procedure may be implemented by using a cooperation relationship or a work allocation manner corresponding to FIG. 2B(1) and FIG. 2B(2) or FIG. 2A. Details are not described.

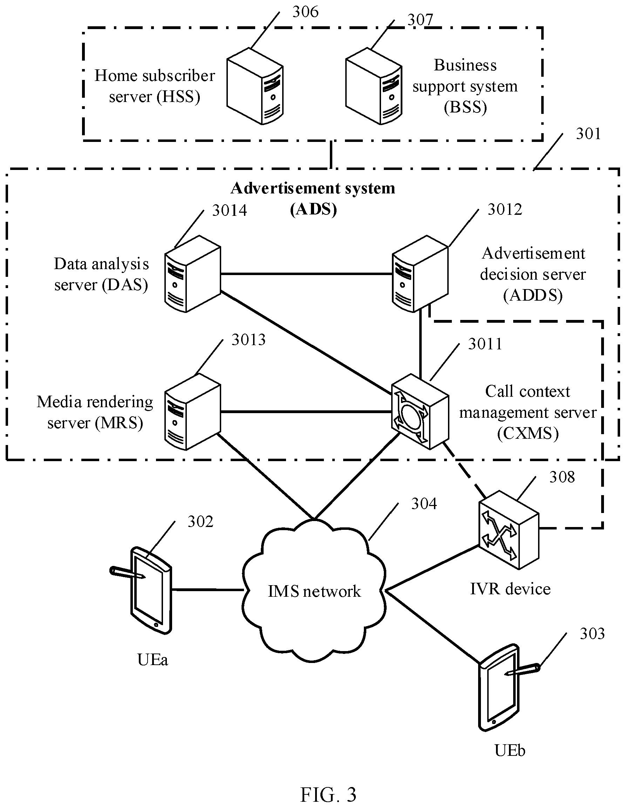

FIG. 3 is an architectural diagram of a fourth communications system according to an embodiment of this application, is used to implement an advertisement service in a call process, and includes:
an advertisement system (ADvertisement System, ADS) 301 that is equivalent to the call process media application system 11 in FIG. 1A, FIG. 1B, or FIG. 1C, and includes:
   a call context management server (Call context Management Server, CXMS) 3011;
   an advertisement decision server (ADvertisement Decision Server, ADDS) 3012;
   a media rendering server (Media Rendering Server, MRS) 3013; and
   a data analysis server (Data Analysis Server, DAS) 3014;
user equipment UEa 302;
user equipment UEb 303;
a serving-call session control function (Serving-Call Session Control Function, S-CSCF) device 3041 (not shown in FIG. 3);
an accounting control application server (accounting control application server, ACAS) 3042 (not shown in FIG. 3);
a home subscriber server (Home Subscriber Server, HSS) 306;
a business support system (Business support system, BSS) 307; and
an IVR device 308.

All of the CXMS 3011, the MRS 3013, the UEa 302, the UEb 303, and the IVR device 308 are connected to an IMS (IP multimedia system, IP multimedia subsystem) network 304.

The devices or servers are separately described as follows:
The CXMS 3011 is equivalent to the call context management device 114 in FIG. 1C, and is configured to: monitor and obtain call signaling related to a call service implemented between the UEa 302 and the UEb 303 or between the UEa 302 and the IVR device 308, obtain call context information with reference to one or any combination of plan information and account information of the UEa 302 provided by the HSS 306 or the BSS 307, predicted call duration between two parties (the UEa 302 and the UEb 303) provided by the DAS 3014, location information of the UEa provided by the HSS 306, and the like, and provide the call context information for the ADDS 3012, to obtain a target rendering occasion and/or information about target advertisement content from the ADDS 3012, so as to indicate the MRS 3013 to trigger the UEa 302 to render the target advertisement content on the target rendering occasion. Similar to the call context management device 111 or the call context management device 114, the CXMS 3011 may be implemented based on a CAT AS and/or a CRS AS.

The ADDS 3012 is equivalent to the media determining device 115 in FIG. 1C, and is configured to: determine the target rendering occasion and/or the target advertisement content based on the call context information provided by the CXMS 3011, and send the target rendering occasion and/or the information about the target advertisement content to the CXMS 3011. There may be no dependency relationship (in other words, there is no time sequence) between determining of the target rendering occasion and determining of the target advertisement content. Alternatively, there may be a dependency relationship, for example, the target advertisement content is determined based on the target rendering occasion and the call context information.

In a possible scenario, the target rendering occasion may be unrelated to the call context information, and is set by a telecommunications operator and/or an advertiser in advance. Therefore, the ADDS 3012 may not determine the target rendering occasion based on the call context information. For example, in an advertisement service charged by clicks, there may be a relatively fixed rendering occasion, for example, the rendering occasion is fixed in a dialing process. However, in this case, advertisement content suitable for a user corresponding to the UEa 302 may be determined based on the call context information (to reduce antipathy of the user to the advertisement content).

In another possible scenario, the target advertisement content may be unrelated to the call context information, and is set by a telecommunications operator and/or an advertiser in advance. Therefore, the ADDS 3012 may not determine the target advertisement content based on the call context information. For example, in an advertisement service settled by a buy-out time period, there may be relatively fixed advertisement content, for example, there is fixed advertisement content with a theme of "a specific brand of wine". However, in this case, a target rendering occasion suitable for a user corresponding to the UEa 302 may be determined based on the call context information (to reduce antipathy of the user to the rendering occasion).

The MRS 3013 is equivalent to the media rendering device 113 in FIG. 1B or FIG. 1C, and is configured to trigger, in response to an indication of the CXMS 3011, the UEa 302 to render the target advertisement content. The target advertisement content may be determined by the ADDS 3012, or may be preset by the telecommunications operator and/or the advertiser. The MRS 3013 may send the target advertisement content through a media channel previously established with the UEa 302, so that the UEa 302 receives and renders the target advertisement content. The MRS 3013 may send the information about the target advertisement content, for example, a URL of the target advertisement content, to the UEa 302, and then the UEa 302 triggers establishment of a media channel between the UEa 302 and the MRS 3013, to obtain and render the target advertisement content through the media channel. In this case, optionally, the CXMS 3011 may further indicate, at an end time point of the target rendering occasion, the MRS 3013 to trigger the UEa 302 to stop rendering the target advertisement content, and the MRS 3013 then sends, to the UEa 302 based on an indication, indication information for stopping rendering the advertisement content. Similarly, the MRS 3013 may be implemented based on an MRF device defined in a 3GPP standard specification.

The DAS 3014 is configured to: provide data, for example, the predicted call duration, required for forming the call context information for the CXMS 3011, and provide a basis for the ADDS 3012 for determining the target rendering occasion or the target media content, for example, a click rate and popularity of advertisement content.

Based on different deployment policies of the telecommunications operator, the ADS 301 may be deployed at a location, in the IMS network 304, close to a side of the UEa 302 (to facilitate access to related information about the UEa 302), may be deployed at a location, in the IMS network 304, close to a side of the UEb 303 (to facilitate access to related information about the UEb 303), or may be deployed at a neutral location in the IMS network 304. When the latter two deployment locations are used, the ADS 301 may access related information, for example, subscriber information and plan information, on the side of the UEa 302 through a remote interface, data sharing, or data synchronization, or in another manner.

The UEa 302 and the UEb 303 are similar to the user equipment 12 in FIG. 1A. In actual application, there may be more user equipment in FIG. 3.

The S-CSCF device 3041 (not shown in FIG. 3) is a service switching center in the IMS network, is mainly responsible for receiving and processing a registration request of the user equipment, user management, session control, service switching, service control, SIP (Session Initiation Protocol, session initiation protocol) message processing, and the like, and can send a SIP request to a corresponding application server, for example, the CXMS 3011 and the ACAS 3042, based on a preset application triggering rule.

The ACAS 3042 (not shown in FIG. 3) is configured to: receive call signaling of the UEa 302 from the S-CSCF device 3041, and perform operations such as authentication and charging on the call signaling, and may obtain the plan information, subscription information, and the like corresponding to the UEa 302 from the HSS 306 or the BSS 307, and provide the plan information, the subscription information, and the like for the S-CSCF device 3041 by using the call signaling.

It should be understood that the call signaling in the IMS network 304 may further pass through some other network elements, for example, an SGW (serving gateway, serving gateway)/a PGW (packet data network gateway, packet data network gateway), an SBC (session border controller, session border controller)/a P-CSCF (proxy-call session control function, proxy-call session control function) device, and an I-CSCF (interrogating-call session control function, interrogating-call session control function) device, which are not shown in FIG. 3.

The HSS 306 is configured to provide network plan (for example, virtual private network plan) information and the subscription information (for example, information about whether the user corresponding to the UEa allows advertisement content to be rendered in a call process) corresponding to the UEa 302 for the ADS 301, the ACAS 3042, and the like.

The BSS 307 is configured to provide raw data and plan (for example, monthly data traffic plan) information related to the call service such as a call record between the UEa 302 and the UEb 303 for the DAS 3014.

The IVR device 308 is an interactive voice response device, can implement functions such as directing a user to select a service, automatic voice broadcast, and switching to manual connection, is an important device for a call center (Call Center, CC) to implement a 24/7 service, may initiate a call service (for the call center, which is referred to as an outgoing call service, outgoing call service) with the UEa 302 as a caller, or may accept, as a callee, a call service (for the call center, which is referred to as an incoming call service, incoming call service) initiated by the UEa 302, may obtain a key sequence sent by the UEa 302 in a process of interacting with the IVR device from an RTP media stream established with the UEa 302, and may provide the key sequence for the CXMS 3011, so that the CXMS 3011 forms the call context information based on the key sequence, and uses the call context information as a basis for subsequently determining, by the ADDS 3012, the target rendering occasion and/or the target advertisement content.

Method procedures corresponding to FIG. 4A(1) and FIG. 4A(2) to FIG. 4F(1) and FIG. 4F(2) may be implemented based on the architecture shown in FIG. 3, and are separately described below.

FIG. 4A(1) and FIG. 4A(2) are a diagram of a first method procedure for rendering advertisement content in a call process according to an embodiment of this application. The method procedure is implemented based on the architecture shown in FIG. 3. A correspondence between each participant and the entity in FIG. 3 is shown by a reference mark in FIG. 4A(1) and FIG. 4A(2). For example, a "CXMS" in the method procedure is the CXMS 3011 in FIG. 3. In the method procedure, call context information includes call status information of UEa, and is used as one of bases for determining target advertisement content and/or a target rendering occasion. Main steps are as follows:
Step 400: The UEa and UEb start a call service.

Specifically, the UEa may initiate the call service as a calling device, or the UEb may initiate the call service as a calling device.

Step 401: The CXMS receives call signaling (first call signaling) of the call service from an IMS network.

Specifically, in a process of implementing the call service, the CXMS obtains call signaling, for example, a SIP-Invite (SIP-invite) message, a SIP-ACK (SIP-acknowledgment) message, a SIP-OPTIONS (SIP-options) message, a SIP-BYE (SIP-bye) message, or a SIP-CANCEL (SIP-cancel) message, related to the call service from a call session control device, for example, an S-CSCF device, in the IMS network. Optionally, the CXMS may obtain the call signaling from another type of CSCF device.

Step 402: The CXMS obtains subscription information of the UEa from an HSS.

Some users may not want to receive advertisement content in a process of implementing a call service. Therefore, when receiving the call signaling of the call service, the CXMS obtains the subscription information of a user corresponding to the UEa, to confirm whether the user agrees to render advertisement content in a call process. If the subscription information indicates that the user does not want to render the advertisement content in the call process, the method procedure ends. Otherwise, subsequent steps continue to be performed.

Specifically, the CXMS parses the call signaling, obtains an identifier of the UEa from the call signaling, and then sends a request message including the identifier of the UEa to the HSS, to receive a response message including the subscription information corresponding to the UEa from the HSS. In the method procedure, it is assumed that the subscription information corresponding to the UEa indicates that the user agrees to render the advertisement content in the call process, and the CXMS continues, based on this, to perform the following steps.

This step is optional. When a telecommunications operator can consider by default that all users agree to receive advertisement content in a call process, or when an end user can set whether to receive advertisement content in a call process in user equipment, the CXMS may not obtain the subscription information of the user corresponding to the UEa, and does not determine, based on the subscription information, whether the user agrees to render the advertisement content in the call process.

Step 403: The CXMS obtains call status information of the UEa.

Specifically, the CXMS parses the call signaling, and obtains the call status information of the UEa based on the call signaling. The call status information includes a call status of the UEa and related information about the call status.

Specifically, the call status includes any one or any combination of the following: a call service operation previously performed by the UEa, a call service operation currently performed by the UEa, or a call service operation to be performed by the UEa. The call service operation includes dialing, waiting, answering, and the like. Therefore, the call status reflects progress of the UEa in the call service process. The CXMS reads a signaling code or a status code from the call signaling, and determines the call status of the UEa based on the signaling code or the status code. An example is provided below.

It is assumed that in step 400, the UEa initiates the call service as a calling device. If the call signaling received by the CXMS in step 401 is a "callee ringing message: 180 message", where 180 is the signaling code or the status code, the CXMS may determine that the call status of the UEa is "calling the other party as a caller, and waiting for answer as the other party is available". If the call signaling received by the CXMS in step 401 is a "callee power-off message: 487 message", the CXMS may determine that the call status of the UEa is "the UEa calls the other party as a caller, and is waiting to hang up because the other party is powered off". More examples are shown in Table 1.

**Table 1**

| Call signaling | Call status of the UEa |
|---|---|
| Caller invite message: invite message | The UEa calls the other party as a caller, and is waiting for answer |
| Callee busy message: 486 message (Busy Here reason= 17) | The UEa calls the other party as a caller, and is waiting to hang up because the other party is busy |
| Callee power-off message: 487 message (Request Terminated reason=31) | The UEa calls the other party as a caller, and is waiting to hang up because the other party is powered off |
| Callee no-answer message: 408 message (Request Timeout reason=19) | The UEa calls the other party as a caller, and is waiting to hang up because the other party does not answer the call |
| Callee unavailable message: 480 message (Temporarily unavailable reason=18) | The UEa calls the other party as a caller, and is waiting to hang up because the other party is unavailable |
| Callee waiting message: 180 (carries alert-info header field) | The UEa calls the other party as a caller, enters a call status, and is waiting for the call to be resumed because the other party triggers call hold |
| Callee forwarding message: 181 or 183 (carries forwarding information) | The UEa calls the other party as a caller, and is waiting for answer because the other party transfers the call to another device |
| Callee ringing message: 180 message | The UEa calls the other party as a caller, and is waiting for answer as the other party is available |
| Callee pickup message: 200 OK-invite message | The UEa calls the other party as a caller, and starts to enter a call status |
| Caller hang-up message: bye (leg=1) | The UEa calls the other party as a caller, and terminates the call |
| Callee hang-up message: bye (leg=2) | The UEa calls the other party as a caller, and the other party terminates the call |

A method for representing the call status is not limited in this embodiment of this application. For example, the call status of the UEa may be represented by using the status code, the call status of the UEa may be represented by using a character string. The call status in which "the UEa calls the other party as a caller, and is waiting for answer as the other party is available" is used as an example. In this case, the call status may be represented by using the status code "180" or a character string "calling->ringback->waiting for answer".

Specifically, the related information about the call status includes a start time point and a theoretical end time point of the call status. The start time point of the call status is a time point at which the UEa enters the call status. The theoretical end time point of the call status is a theoretical end time point of the call status that exists when there is no interference from a user of either party and that is based on a related signaling protocol. For ease of description, a period from the start time point of the call status to the theoretical end time point of the call status is referred to as a theoretical duration period of the call status, and duration from the start time point of the call status to the theoretical end time point of the call status is referred to as theoretical duration of the call status. For example, for the call status in which "the UEa calls the other party as a caller, and is waiting to hang up because the other party is unavailable", if the user corresponding to the UEa does not hang up, theoretical duration of the status is 60 seconds (based on the related signaling protocol). For another example, for the call status in which "the UEa calls the other party as a caller, and is waiting to hang up because the other party does not answer the call", if the user of the UEa does not hang up, theoretical duration of the call status is 120 seconds (based on the related signaling protocol).

Optionally, the CXMS may read a timestamp from the call signaling, and use the timestamp as the start time point of the call status, or may use a time point at which the call signaling is received from the S-CSCF device as the start time point of the call status.

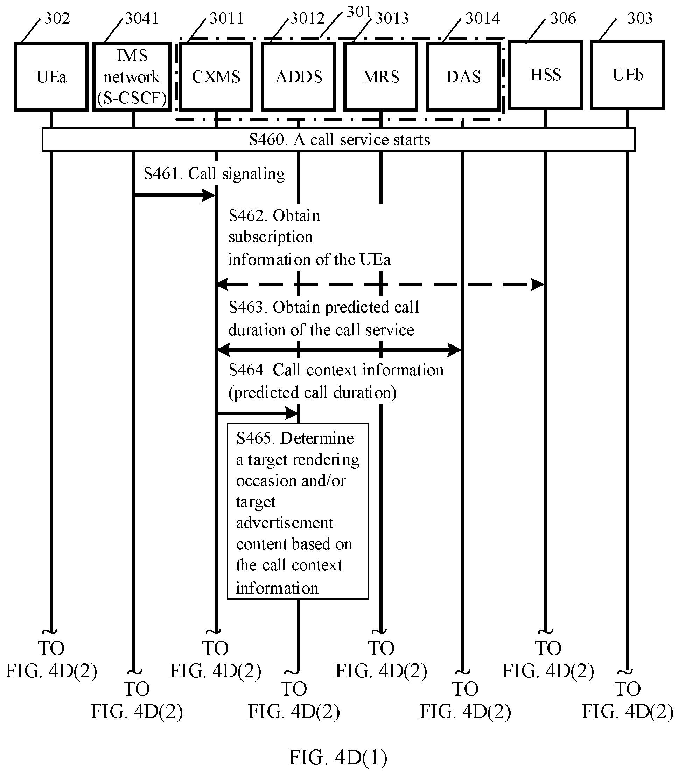

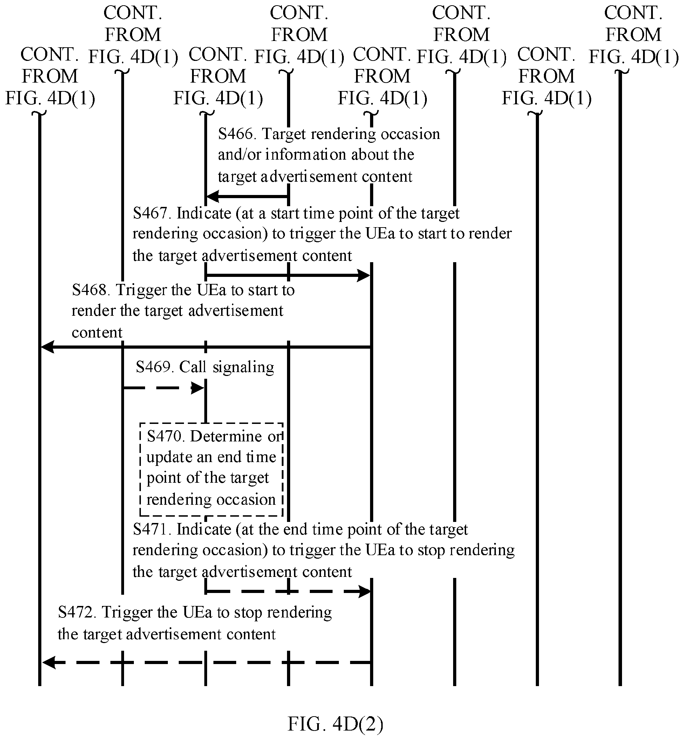

Optionally, the CXMS determines the theoretical end time point of the call status based on the related signaling protocol. It should be understood that not all call statuses correspond to a theoretical end time point. For example, when the UEa enters the call status, there is no theoretical end time point. In this case, call duration may be predicted by an ADDS. For details, refer to a method procedure corresponding to FIG. 4D(1) and FIG. 4D(2).

In this way, the CXMS obtains the call status information, of the UEa, that includes the call status, the start time point of the call status, and the end time point of the call status.

Step 404: The CXMS sends call context information that includes the call status information of the UEa to the ADDS.

There are two factors for enabling the UEa to render media content: a target rendering occasion and target advertisement content. Either or both of the target rendering occasion and the target advertisement content (refer to step 203) may be determined based on the call context information of the UEa.

Specifically, to enable the ADDS to determine the target rendering occasion and/or the target advertisement content based on the call context information, the CXMS generates the call context information based on the call status information obtained in step 403, and sends an information rendering request message (an example bearer message is an HTTP request message) to the ADDS. The information rendering request message includes the call context information, and the call context information includes the call status information. Optionally, the call context information further includes the identifier of the UEa or an identifier of the user corresponding to the UEa, and the CXMS obtains the identifier of the UEa or the identifier of the user corresponding to the UEa based on the call signaling. An example of the information rendering request message is as follows:

| |
|---|
| ```
          RenderInfoRequest{
               ...//Other fields
               "CallContext" {//Call context information
                   "UEID": 13812345678; //Identifier of the UEa
                   "CallStatus": 180; //Call status
                   "StartTime": "20200415180002"; //Start time point of the call status
                   "EstEndTime": "20200415180102";
//Theoretical end time point of the call status
               }
          }
``` |

}It should be understood that a hierarchical structure of data in the information rendering request message is merely an example, and constitutes no limitation. A person skilled in the art may design an information rendering request message of another hierarchical structure based on this.

It should be understood that a larger amount of content included in the call context information sent to the ADDS indicates a larger amount of content that can be determined by the ADDS and a higher degree of appropriateness of a decision that is made. If content determined by the ADDS needs to be reduced or a requirement for appropriateness of a decision is lowered, the content included in the call context information may be appropriately reduced. For example, the StartTime field and the EstEndTime field may not be included.

Step 405: The ADDS determines the target rendering occasion and/or the target advertisement content based on the call context information.

Specifically, the ADDS receives the information rendering request message from the CXMS, obtains the call context information from the information rendering request message, then obtains the call status information from the call context information, and then determines the target rendering occasion and/or the target advertisement content based on the call status information.

(1) For how to determine the target rendering occasion based on the call status information, an example method is as follows:
The ADDS obtains the start time point of the call status from the information rendering request message, sets a start time point of the target rendering occasion based on the start time point of the call status, obtains the theoretical end time point of the call status from the information rendering request message, and sets an end time point of the target rendering occasion based on the theoretical end time point.

For example, if the start time point of the call status is Tstart, and the theoretical end time point of the call status is Tendt, the start time point and the end time point of the target rendering occasion may be set as shown in Table 2.

**Table 2**

| Start time point of the target rendering occasion | End time point of the target rendering occasion | Description |
|---|---|---|
| Tstart | Tstart+k^{∗}(Tendt-Tstart) | A time range occupied by the target rendering occasion is proportional to the theoretical duration period of the call status, where k>0. |
| Tstart+Da | Tendt-Db | The target rendering occasion starts in the theoretical duration period of the call status with a delay (the delay is Da, where Da≥0), and ends in advance (an advance is Db, where Db<(Tendt-Tstart), and when Db is a negative number, it indicates that the end time point of the target rendering occasion is later than the end time point in the theoretical duration period). |
| Tstart | Not determined or to be determined | The end time point is determined by the CXMS, or automatically ends when sending of a video stream is completed. |
| Tstart+Da | Not determined or to be determined | The end time point is determined by the CXMS, or automatically ends when sending of a video stream is completed. |

It should be understood that Table 2 is not exhaustive. A person skilled in the art may set the start time point and the end time point of the target rendering occasion in another manner based on the start time point and the theoretical end time point of the call status and this embodiment of this application.

It should be noted that if the call status of the UEa indicates that the UEa is on a call or is placed on hold by the other party, there is no corresponding theoretical end time point, and the end time point of the target rendering occasion may be determined by the ADDS based on preset duration Dset, for example, the end time point is set to Tstart+Dset.

It should be understood that the ADDS may not determine the target rendering occasion, and may not return the target rendering occasion to the CXMS. In this case, the CXMS may subsequently determine the target rendering occasion.

(2) For how to determine the target advertisement content based on the call status information, an example method is as follows:
(2.1) The ADDS may determine a call phase (which means "before a call", "on a call", or "after a call") of the UEa based on the call status in the call context information, and then use the call phase of the UEa as one of factors or conditions for determining the target advertisement content.

The ADDS may select the target advertisement content from advertisement content that is in no audio conflict with that in the call phase. An audio conflict refers to a case in which the user corresponding to the UEa hears both a sound of the call service (for example, a sound of the other party) and a sound in the advertisement content. Specifically, when the UEa is in a call phase of "before a call" or "after a call", there is no call audio content, and therefore the target advertisement content may be selected from advertisement content with a sound, or the target advertisement content may be selected from advertisement content without a sound. If the UEa is in a call phase of "on a call", there is call audio content, and therefore the target advertisement content is selected only from advertisement content without a sound (for example, video content without a sound, a GIF animation, or an HTML page), to avoid a case in which there is a conflict between a sound in advertisement content and call audio, and interference is caused to call experience of the user.

Alternatively, the ADDS may select the target advertisement content from advertisement content that is in an audio conflict with that in the call phase, and set an audio mark or an audio conflict mark for the target advertisement content. Specifically, when the UEa is in a call phase of "on a call", the target advertisement content is selected from advertisement content with a sound, and the audio conflict mark or the audio mark is attached to information about the target advertisement content (refer to an example message in step 406), so that when the UEa is subsequently triggered to render the target advertisement content, rendering of an audio part in the target advertisement content is not triggered.

(2.2) Alternatively, the ADDS may use the start time point and the theoretical end time point of the call status as one of factors or conditions for determining the target advertisement content. For example, the ADDS selects the target advertisement content from advertisement content (it is assumed that the advertisement content is of a video type) whose rendering duration is not greater than the theoretical duration Dsta of the call status. It should be understood that if the target advertisement content selected by the ADDS is a plurality of pieces of video content, total duration of these pieces of video content is not greater than Dsta.

It should be understood that rendering duration of advertisement content of a type such as an image or an HTML page is limited by the target rendering occasion. Therefore, the duration of this type of target advertisement content may be considered as 0, to meet a requirement that "the rendering duration is not greater than the theoretical duration Dsta of the call status". The rendering duration of the target advertisement content may be controlled by setting the start time point and the end time point of the target rendering occasion.

(2.3) Alternatively, the ADDS may combine a call phase of the UEa and the theoretical duration Dsta of the UEa in the call status, and use both the call phase and the theoretical duration as a factor for determining the target advertisement content. For example, for the call status in which "the UEa calls the other party as a caller, and is waiting to hang up because the other party is unavailable", the call phase of the UEa is "before a call", and the theoretical duration is 60 seconds. In this case, the ADDS may select the target advertisement content from advertisement content that is of a video type, whose duration is not greater than 60 seconds, and that is with a sound.

(2.4) It should be understood that the call status information of the UEa is merely a factor for determining the target advertisement content, and the ADDS may further determine the target advertisement content with reference to the call status information of the UEa and another factor. For example, the ADDS may further obtain the identifier of the UEa or the identifier of the user corresponding to the UEa from the call context information, send the identifier to a DAS, to obtain feature information of the user corresponding to the UEa from the DAS, and then use the feature information as a factor for determining the target advertisement content. For example, if the feature information of the user obtained by the ADDS is a "young user", advertisement content of a product suitable for the young user is preferentially selected.

It should be understood that the ADDS may not determine the target advertisement content, and may not return the information about the target advertisement content. In this case, the CXMS may subsequently use default or preset advertisement content as the target advertisement content.

It should be understood that there is no fixed time sequence between determining of the target advertisement content and determining of the target rendering occasion. For example, when the target advertisement content is non-video content (a picture, an HTML page, or the like), the target advertisement content may be first determined, and then the target rendering occasion may be determined. When the target advertisement content is video content, the target rendering occasion may be first determined, and then the target advertisement content may be determined based on the target rendering occasion. For example, the start time point of the target rendering occasion is set to Tstart, and the end time point is set to Tstart+k*(Tendt-Tstart). In this case, the target advertisement content may be selected from video content whose play duration is not greater than k*(Tendt-Tstart).

Step 406: The ADDS returns the target rendering occasion and/or the information about the target advertisement content to the CXMS.

Specifically, the ADDS returns an information rendering response message to the CXMS. The information rendering response message includes the target rendering occasion and/or the information about the target advertisement content (for example, an identifier of the target advertisement content or a URL of the target advertisement content) determined in step 405. An example of the information rendering response message is as follows:

| |
|---|
| ```
          RenderInfoResponse{
               ...//Other fields
               "RenderOpportunity" {//Target rendering occasion
                     "StartTime": "20200415180005";
//Start time point of the target rendering occasion
                     "EndTime": "20200415180040";
//End time point of the target rendering occasion
               }
               "RenderADURL": "http://www.ad.com/123.mp4"
//URL of the target advertisement content
               "ADWithAudio": "true" //Audio mark (this is advertisement content with audio)
          }
``` |

Or

| |
|---|
| ```
          RenderInfoResponse{
               ...//Other fields
               "RenderOpportunity" {//Target rendering occasion
                     "StartTime": "20200415180005";
//Start time point of the target rendering occasion
                     "EndTime": "20200415180040";
//End time point of the target rendering occasion }
               "RenderADURL": "http://www.ad.com/123.mp4"
//URL of the target advertisement content
               "AudioConflict": "true" //Audio conflict
mark (there is an audio conflict with the call service when
               the advertisement content is rendered on the occasion)
           }
``` |

Or

| |
|---|
| ```
          RenderInfoResponse{
               ...//Other fields
               "RenderOpportunity" {//Target rendering occasion
                     "StartTime": "20200415180005";
//Start time point of the target rendering occasion
                     "EndTime": "20200415180040";
//End time point of the target rendering occasion
               }
               "RenderADURL": "http://www.ad.com/123.mp4"
//URL of the target advertisement content
               "RenderADID": "ASDF1234QWER" //Identifier of the target advertisement content
          }
``` |

It should be understood that there is no fixed cooperation relationship and work allocation manner between the CXMS and the ADDS. For example, in a possible solution, the ADDS may determine the theoretical end time point of the call status. In this case, in step 403, the information rendering request message sent by the CXMS may not include the theoretical end time point. For another example, the call phase of the UEa may be determined by the CXMS. In this case, the information rendering request message in step 403 may further include information about the call phase of the UEa (for example, the phase information is included in the call context information and sent to the ADDS).

Step 407: The CXMS indicates, at the start time point of the target rendering occasion, an MRS to trigger the UEa to start to render the target advertisement content.

Specifically, the CXMS sends indication information to the MRS at the start time point of the target rendering occasion (or a current time point), where the indication information includes the information about the target advertisement content, so that the MRS triggers the UEa to render the target advertisement content. Example indication information is as follows:

| |
|---|
| ```
          RenderInstruction{
               ...//Other fields
               "UEID": "13812345678" //Identifier of the user equipment
               "RenderADURL": "http://www.ad.com/123.mp4"
//URL of the target advertisement content
          }
``` |

Or

| |
|---|
| ```
          RenderInstruction{
               ...//Other fields
               "UEID": "13812345678" //Identifier of the user equipment
               "RenderADURL": "http://www.ad.com/123.mp4"
//URL of the target advertisement content
               "SkipAudio": "true" //Skip playing audio
          }
``` |

Or

| |
|---|
| ```
          RenderInstruction{
               ...//Other fields
               "UEID": "13812345678" //Identifier of the user equipment
               "RenderADID": "ASDF1234QWER" //Identifier of the target advertisement content
          }
``` |

The "SkipAudio" field indicates that when the information rendering response message includes the audio mark or the audio conflict mark, the MRS is indicated not to trigger the UEa to play the audio part in the target advertisement content.

For content of this step, refer to step 227.

Step 408: The MRS triggers the UEa to start to render the target advertisement content.

Specifically, the MRS receives the indication information sent by the CXMS, obtains the information about the target advertisement content from the indication information, and then triggers the UEa to render the target advertisement content. For how to trigger the UEa to render the target advertisement content, refer to related description in step 204.

In this case, the UEa starts to render the target advertisement content.

If the ADDS previously does not provide the end time point of the target rendering occasion, the CXMS may determine the end time point by performing step 409 and step 410. If the ADDS previously provides the end time point of the target rendering occasion, the end time point of the target rendering occasion may be updated by performing step 409 and step 410. In this way, the target advertisement content may be rendered only in an actual duration period (namely, a period from the start time point to an actual end time point) of the call status, to help improve user experience.

Step 409: The CXMS continues to receive call signaling (second call signaling) of the call service from the IMS network.

For specific content of this step, refer to step 401.

Step 410: The CXMS determines or updates the end time point of the target rendering occasion.

Specifically, if determining, based on the call signaling obtained in step 409, that the call status of the UEa ends (or the UEa enters another call status different from the call status), the CXMS updates the end time point of the target rendering occasion to the current time point, so that the MRS immediately triggers the UEa to stop rendering the target advertisement content. Alternatively, the CXMS directly and immediately indicates the MRS to trigger the UEa to stop rendering the target advertisement content, and then goes to step 412.

Step 411: The CXMS indicates, at the end time point of the target rendering occasion, the MRS to trigger the UEa to stop rendering the target advertisement content.

Specifically, the CXMS sends indication information to the MRS at the end time point of the target rendering occasion, so that the MRS triggers the UEa to stop rendering the target advertisement content. The end time point of the target rendering occasion may be the end time point determined in step 405, or may be the end time point determined or updated in step 410.

Example indication information is as follows:

| |
|---|
| ```
          RenderInstruction{
               ...//Other fields
               "UEID": "13812345678" //Identifier of the user equipment
               "RenderADURL": "http://www.ad.com/123.mp4"
//URL of the target advertisement content
               "Stop": "Audio" //Indicate the MRS not to play audio to the UEa
(not to send data in the audio part)
          }
``` |

Or

| |
|---|
| ```
          RenderInstruction{
               ...//Other fields
               "UEID": "13812345678" //Identifier of the user equipment
               "RenderADURL": "http://www.ad.com/123.mp4"
//URL of the target advertisement content
               "Stop": "Audio+Video"
//Indicate the MRS not to play audio or a video to the UEa (not to send
 audio or video data)
           }
``` |

Or

| |
|---|
| ```
          RenderInstruction{
               ...//Other fields
               "UEID": "13812345678" //Identifier of the user equipment
               "RenderADURL": "http://www.ad.com/aaa.gif'
//URL of the target advertisement content
               "Stop": "PIC" //Indicate the MRS no longer
to render a picture to the UEa (not to send picture data) }
``` |

Step 412: The MRS triggers the UEa to stop rendering the target advertisement content.

Specifically, the MRS receives the indication information sent by the call context management device, and triggers, based on the indication information, the UEa to stop rendering the target advertisement content. For how to trigger the UEa to stop rendering the target advertisement content, refer to related description in step 205.

Step 411 and step 412 are optional steps.

In the method procedure corresponding to FIG. 4A(1) and FIG. 4A(2), the advertisement content and/or the rendering occasion are/is determined based on the call status information of the user equipment, so that impact of rendering of the advertisement content on call experience may be reduced to some extent. In this way, acceptance of the user to the advertisement content in the call process may be improved, and an advertising effect may be improved, to improve utilization of network resources of the operator.

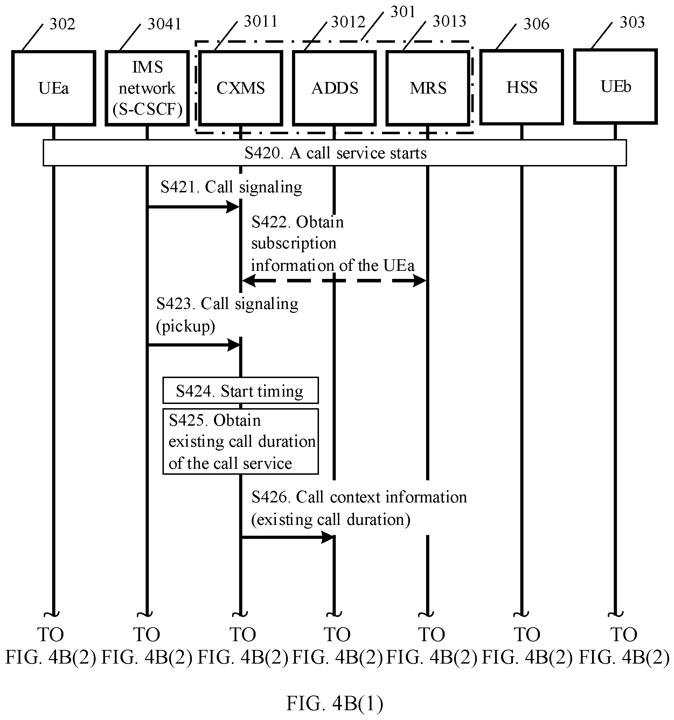

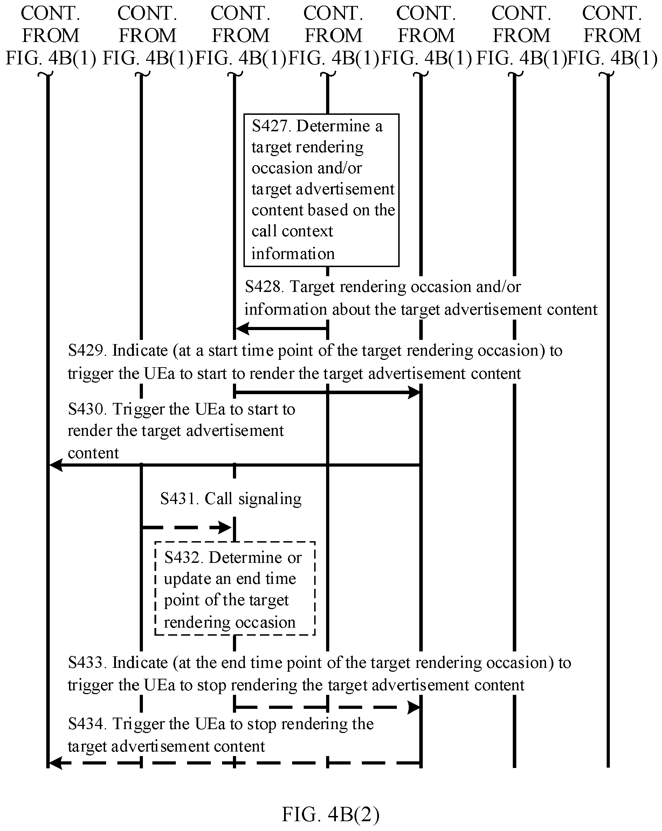

FIG. 4B(1) and FIG. 4B(2) are a diagram of a second method procedure for rendering advertisement content in a call process according to an embodiment of this application. The method procedure is implemented based on the architecture shown in FIG. 3. A correspondence between each participant and the entity in FIG. 3 is shown by a reference mark in FIG. 4B(1) and FIG. 4B(2). For example, an "ADDS" in the method procedure is the ADDS 3012 in FIG. 3. In the method procedure, call context information includes existing call duration of a call service, and is used as one of bases for determining target advertisement content and/or a target rendering occasion. Main steps are as follows:
Step 420: UEa and UEb start a call service.

For content of this step, refer to step 400.

Step 421: A CXMS receives call signaling of the call service from an IMS network.

For content of this step, refer to step 401.

Step 422: The CXMS obtains subscription information of the UEa from an HSS.

For content of this step, refer to step 402.

Step 423: The CXMS receives call signaling (pickup signaling or first call signaling) of the call service from the IMS network.

Specifically, in a process of implementing the call service, the CXMS continues to receive the call signaling of the call service from an S-CSCF device in the IMS network, and goes to step 424 when determining that the received call signaling is callee pickup signaling, for example, the call signaling is a "callee pickup message: 200 OK-invite message". Otherwise, the CXMS continues to receive or monitor the call signaling of the call service.

It should be understood that a called device herein may be the UEa or the UEb.

Step 424: The CXMS starts timing.

Specifically, the CXMS starts timing for the call service when determining that the two parties enter a call status, for example, records a current time point Tcon, records a timestamp StampBegin in the pickup signaling, or starts a timer for the call service.

Step 425: The CXMS calculates existing call duration of the call service.

Specifically, the CXMS continuously monitors the call signaling, of the call service, sent by the S-CSCF device, confirms that the call service is still on a call, and calculates the existing call duration Dpss of the call service, for example, Dpss=Tcur-Tcon or Dpss=Tcur-StampBegin, or may read Dpss from the timer started in step 423.

Step 426: The CXMS sends call context information that includes the existing call duration of the call service to the ADDS.

Specifically, the CXMS generates the call context information based on the existing call duration Dpss obtained in step 425, and sends an information rendering request message that includes the call context information to the ADDS. The call context information includes the existing call duration Dpss. Optionally, the call context information further includes an identifier of the UEa or an identifier of a user corresponding to the UEa. For a method for obtaining, by the CXMS, the identifier of the UEa or the identifier of the user corresponding to the UEa, refer to step 404. Optionally, the call context information may further include a current call status of the UEa. For a method for obtaining, by the CXMS, the current call status of the UEa, refer to step 403. An example of the information rendering request message is as follows:

| |
|---|
| ```
          RenderInfoRequest{
               ...//Other fields
               "CallContext" {//Call context information
                   "UEID": 13812345678; //Identifier of the UEa
                   "CallStatus": "The UEa calls the other
party as a caller, and the other party terminates the call";
                   //Call status
                   "DurationPass": 300; //Existing call duration
                   }
          }
``` |

Step 427: The ADDS determines a target rendering occasion and/or target advertisement content based on the existing call duration.

Specifically, the ADDS receives the information rendering request message from the CXMS, obtains the call context information from the information rendering request message, and then determines the target rendering occasion and/or the target advertisement content based on the call context information. Specifically, the ADDS obtains the existing call duration Dpss from the call context information, and then determines the target rendering occasion and/or the target advertisement content for the UEa based on Dpss.

(1) For how to determine the target rendering occasion based on Dpss, an example method is as follows:
The ADDS may set a start time point of the target rendering occasion based on a current time point, and set an end time point of the target rendering occasion based on the existing call duration.

The ADDS may use the current time point Tcur as the start time point of the target rendering occasion, and use a time point Tcur+m*Dpss as the end time point of the target rendering occasion. If the target advertisement content is video content, the end time point of the target rendering occasion may be empty (not set to a specific value).

For example, if the current time point is Tcur, the start time point and the end time point of the target rendering occasion may be set as shown in Table 3.

**Table 3**

| Start time point of the target rendering occasion | End time point of the target rendering occasion | Description |
|---|---|---|
| Tcur | Tcur+k^{∗}Dpss | The target rendering occasion starts from the current time point, and ends after duration of k*Dpss, and a time range occupied by the target rendering occasion is proportional to the existing call duration Dpss, where 0<k<1. |
| Tcur+Da | Tcur+Da+Db | The target rendering occasion starts after there is a delay Da from the current time point, and ends after duration of Db, where Da may be a fixed value, and Db and Dpss are in a step function or piecewise function relationship. |
| Tcur | Not determined or to be determined | The target rendering occasion starts from the current time point, and the end time point is determined by the CXMS, or automatically ends when sending of a video stream is completed. |
| Tcur+Da | Not determined or to be determined | The target rendering occasion starts after there is a delay Da from the current time point, and the end time point is determined by the CXMS, or automatically ends when sending of a video stream is completed. |

It should be understood that Table 3 is not exhaustive. A person skilled in the art may set the start time point and the end time point of the target rendering occasion in another manner based on the current time point, the existing call duration, and this embodiment of this application.

(2) For how to determine the target advertisement content based on Dpss, an example method is as follows:
The ADDS determines target rendering duration Dtgt based on the existing call duration Dpss, and selects the target advertisement content from media content whose rendering duration is not greater than the target rendering duration Dtgt.

For example, the ADDS may use m^{∗}Dpss as the target rendering duration Dtgt, and then select the target advertisement content from advertisement content (similar to the foregoing embodiment, rendering duration of non-video advertisement content such as a picture is considered as 0) whose rendering duration is not greater than Dtgt. It should be understood that the target rendering duration and the existing call duration may not necessarily be in a proportional relationship, and there may be a step function relationship or a piecewise function relationship. Details are not described.

Similar to step 405, the existing call duration is merely a factor for determining the target advertisement content, and the ADDS may further determine the target advertisement content with reference to another factor. For example, the ADDS may further request feature information of the user corresponding to the UEa from a DAS, and then use the feature information as a factor or a condition for determining the target advertisement content. If the feature information of the user obtained by the ADDS is a "worker", advertisement content of a product suitable for the worker is preferentially selected. For another example, the ADDS may further determine the target advertisement content with reference to a call status of the UEa. If determining, based on the call status of the UEa, that the call service ends, the ADDS may select advertisement content with a sound.

It should be understood that the ADDS may not determine the target advertisement content, and may not return information about the target advertisement content to the CXMS. In this case, the CXMS may subsequently determine the target advertisement content.

Similar to step 405, the ADDS may first determine the target rendering occasion, and then determine the target advertisement content based on the determined target rendering occasion. For example, the start time point of the target rendering occasion is set to the current time point Tcur, and the end time point is set to Tcur+k^{∗}Dpss. In this case, the target advertisement content may be selected from video content whose play duration is not greater than k^{∗}Dpss.

Step 428: The ADDS returns the target rendering occasion and/or the information about the target advertisement content to the CXMS.

For content of this step, refer to step 406.

Step 429: The CXMS indicates, at the start time point of the target rendering occasion, an MRS to trigger the UEa to start to render the target advertisement content.

For content of this step, refer to step 407.

Step 430: The MRS triggers the UEa to start to render the target advertisement content.

For content of this step, refer to step 408.

In this case, the UEa starts to render the target advertisement content.

In a possible solution, the CXMS may obtain a reporting interval (for example, from the ADDS) in advance, to perform the following operations at an interval of the interval: reporting the existing call duration of the call service to the ADDS (refer to step 426), receiving the target rendering occasion and/or the information about the target media content from the ADDS (refer to step 427 and step 428), and indicating the MRS to trigger the UEa to render the target media content on the target rendering occasion (refer to step 429 and step 430). In this way, in a call process of the call service, the user equipment may be intermittently or periodically triggered to render advertisement content whose time length matches the existing call duration.

In another possible solution, the CXMS may report the existing call duration of the call service to the ADDS only when the call service ends (call signaling indicating that "the UEb hangs up" is received from the S-CSCF device). In this way, when the call ends, the user equipment may be triggered to render advertisement content whose time length matches the existing call duration.

If the ADDS previously does not provide the end time point of the target rendering occasion, the end time point may be determined by performing step 431 and step 432. If the ADDS previously provides the end time point of the target rendering occasion, optionally, the end time point of the target rendering occasion is updated by performing step 431 and step 432. In this way, a time point at which the target advertisement content is rendered may not be later than a time point at which the call ends, to meet a requirement of the end user who does not want to still render the advertisement content after the call ends.

Step 431: The CXMS continues to receive call signaling (second call signaling) of the call service from the IMS network.

For specific content of this step, refer to step 409.

Step 432: The CXMS determines or updates the end time point of the target rendering occasion.

Specifically, if determining, based on the call signaling obtained in step 431, that the UEa is still in the call status, the CXMS keeps the end time point of the target rendering occasion previously provided by the ADDS unchanged. If determining that the call of the UEa ends, the CXMS updates the end time point of the target rendering occasion to the current time point, so that the MRS immediately triggers the UEa to stop rendering the target advertisement content. Alternatively, the CXMS directly indicates the MRS to trigger the UEa to stop rendering the target advertisement content, and then goes to step 434.

Step 433: The CXMS indicates, at the end time point of the target rendering occasion, the MRS to trigger the UEa to stop rendering the target advertisement content.

For content of this step, refer to step 411.

Step 434: The MRS triggers the UEa to stop rendering the target advertisement content.

For content of this step, refer to step 412.

Similar to another method procedure described above, step 433 and step 434 are optional steps.

In the method procedure corresponding to FIG. 4B(1) and FIG. 4B(2), the time length and/or the rendering occasion of the advertisement content are/is determined based on the existing call duration, so that there is a positive correlation between the rendering duration of the advertisement content and actual call duration. In this way, acceptance of the user to the advertisement content may be improved to some extent, and an advertising effect may be improved, to improve utilization of network resources of the operator.

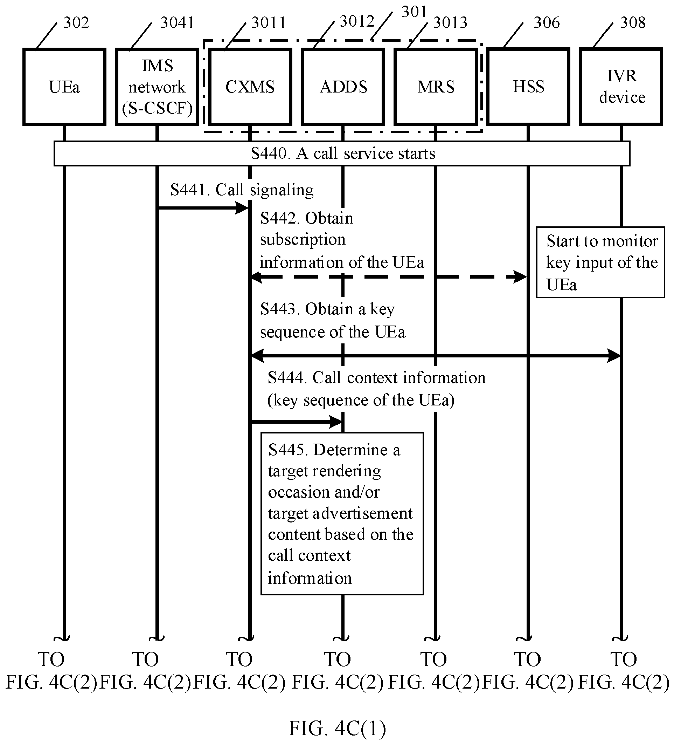

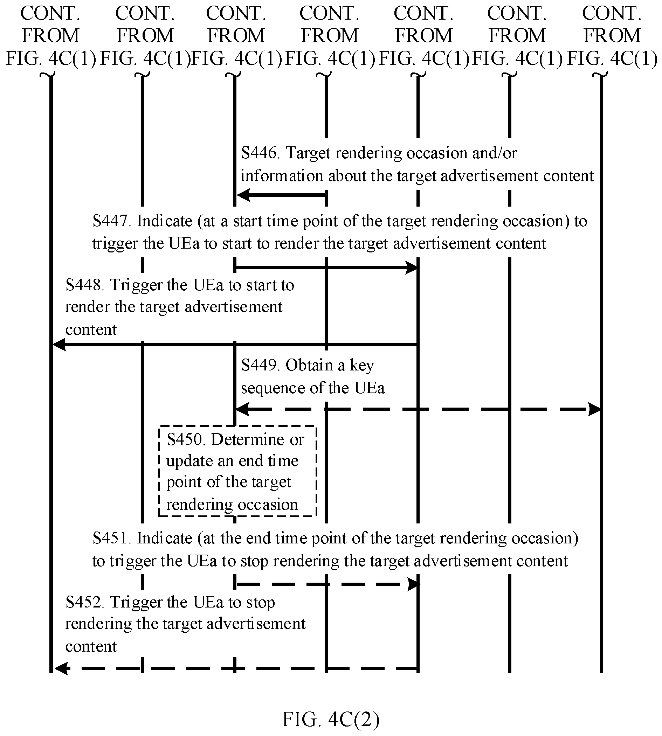

FIG. 4C(1) and FIG. 4C(2) are a diagram of a third method procedure for rendering advertisement content in a call process according to an embodiment of this application. The method procedure is implemented based on the architecture shown in FIG. 3. A correspondence between each participant and the entity in FIG. 3 is shown by a reference mark in FIG. 4C(1) and FIG. 4C(2). For example, an "MRS" in the method procedure is the MRS 3013 in FIG. 3. In the method procedure, key input of user equipment is used as one of bases for determining target advertisement content and a target rendering occasion. Main steps are as follows:
Step 440: UEa and an IVR device start a call service.

Specifically, the UEa may initiate the call service (incoming call service) as a calling device, or the IVR device may initiate the call service (outgoing call service) as a calling device. Then, the IVR device starts to monitor key information entered by a user by using the UEa. Specifically, the IVR device monitors an RTP media stream between the two parties, obtains a DTMF (Dual-Tone Multi-Frequency, dual-tone multi-frequency) signal sent by the UEa 302 from the RTP media stream, and records the signal, to form a key sequence (which is also referred to as a dial sequence, a dial track, a call track, or the like in some cases, and includes one or more pieces of key information). For example, "3->2->4" indicates that the user on a side of the UEa first dials "3" (a third item in a level-1 menu), then dials "2" (a second item in a level-2 menu), and finally dials "4" (a fourth item in a level-3 menu). In this case, based on service logic of the IVR device, announcement content corresponding to the fourth item in the level-3 menu should be played to the user, for example, audio content of billing details of the user is played. Some of announcement content corresponding to these menu items is content that the user wants to listen to in detail, and some of the announcement content is used for navigation, and the user may not need to listen to the content in detail after being familiar with the content. Therefore, in this process, it is suitable for triggering the user equipment to render advertisement content.

One IVR device may simultaneously provide voice services with a plurality of user equipment. Therefore, the IVR device may record a correspondence between an identifier of user equipment and a key sequence, to subsequently provide a key sequence of specific user equipment to a CXMS.

Step 441: The CXMS receives call signaling of the call service from an IMS network.

Specifically, in a process of implementing the call service, the CXMS receives call signaling related to the call service from an S-CSCF device, and obtains an identifier of the UEa from the call signaling.

Step 442: The CXMS obtains subscription information of the UEa from an HSS.

Specifically, the CXMS queries the HSS based on the identifier of the UEa obtained in step 441, to obtain the subscription information of the UEa.

The CXMS determines, based on the obtained subscription information of the UEa, that the user agrees to render advertisement content in a call process, and continues to perform subsequent steps. Similarly, this step is optional.

Step 443: The CXMS obtains key sequence information (first key sequence information) of the UEa from the IVR device.

Specifically, the CXMS obtains, based on the call signaling in step 441, a key sequence entered by the user by using the UEa in the process of implementing the call service and related information about the key sequence. For ease of description, the key sequence entered by the user by using the UEa in the process of implementing the call service is referred to as a "key sequence of the UEa" below.

Specifically, the related information about the key sequence includes a start time point and a theoretical end time point of a voice service corresponding to the key sequence. The voice service may be an automatic announcement service corresponding to the key sequence, for example, playing audio content of a recharge record of the user, or may be a manual voice service corresponding to the key sequence, for example, a manual service of receiving a complaint from the user. When the voice service is an automatic announcement service, the start time point of the voice service is a time point at which the IVR device starts to play corresponding audio content to the UEa, and the theoretical end time point of the voice service is a time point at which the IVR device completes playing of the audio content to the UEa based on an IVR voice service orchestration plan when there is no intervention (for example, the UEa does not hang up). When the voice service is a manual voice service, the start time point of the voice service is a time point at which the UEa answers a call from a customer agent (Customer Agent), and the theoretical end time point of the voice service does not actually exist, but may be replaced with a predicted end time point, for example, the IVR device may estimate the predicted end time point based on historical average service duration of manual voice services corresponding to the key sequence. For example, if the start time point is Thumanstart, and the historical average service duration of the manual voice services corresponding to the key sequence is Daverage, it is determined that the predicted end time point is Thumanstart+Daverage.

In a possible solution, the CXMS may periodically send a query request to the IVR device. The query request includes the identifier of the UEa. The IVR device locally searches, based on the identifier of the UEa, for the key sequence corresponding to the UEa, and sends the key sequence information to the CXMS. The key sequence information includes the key sequence and the start time point and the theoretical end time point of the voice service corresponding to the key sequence.

In another possible solution, the CXMS may further send a subscription request to the IVR device, where the subscription request includes the identifier of the UEa, to subscribe to a key sequence event of the UEa. When detecting key input of the UEa, the IVR device forms the key sequence based on the detected key input and previously recorded key input (for example, if key input "1" is first detected, a key sequence "1" is formed, and then when a key "4" is detected, a key sequence " 1->4" is formed), and sends a key sequence notification message to the CXMS. The notification message includes the key sequence and the start time point and the theoretical end time point of the voice service corresponding to the key sequence. It should be understood that when key input is detected for the first time, the key sequence includes one key.

An example of the key sequence information sent by the IVR device to the CXMS is as follows:

| |
|---|
| ```
          Key Info {
               "KeySerial": "3->1->4" //Key sequence
               "VoiceStartTime": "20200418180002"
//Start time point of the corresponding voice service
               "VoiceEstEndTime": "20200418180102"
//Theoretical end time point of the corresponding voice
 service
          }
``` |

There is no fixed cooperation relationship or work allocation manner between the CXMS and the IVR device. In a possible solution, the start time point and the theoretical end time point of the voice service corresponding to the key sequence of the user equipment may be determined by the CXMS. In this case, the key sequence information sent by the IVR device to the CXMS may be simplified as follows:

| |
|---|
| ```
          Key Info {
               "KeySerial": "3->1->4" //Key sequence
          }
``` |

After receiving the key sequence, the CXMS further improves the start time point and the theoretical end time point. Therefore, the CXMS may obtain announcement duration corresponding to each possible key sequence from the IVR device in advance, as shown in Table 4. The CXMS may use a time point Trcv at which the key sequence information is received from the IVR device as the start time point of the voice service corresponding to the key sequence, and use Trcv+Daudio as the theoretical end time point of the voice service corresponding to the key sequence, where Daudio is announcement duration corresponding to the key sequence.

**Table 4**

| Key sequence | Announcement content | Announcement duration |
|---|---|---|
| None | Speech of welcome and description of a level-1 voice menu | 30 seconds |
| 1 | Description of a first group of level-2 voice menus on the level-1 voice menu | 20 seconds |
| 2 | Description of a second group of level-2 voice menus on the level-1 voice menu | 30 seconds |
| 3 | Description of a third group of level-2 voice menus on the level-1 voice menu | 40 seconds |
| 1->1 | Description of a first group of level-3 voice menus on the first group of level-2 voice menus | 10 second |
| 2->1 | Description of a first group of level-3 voice menus on the second group of level-2 voice menus | 30 seconds |
| 3->4 | Description of a fourth group of level-3 voice menus on the third group of level-2 voice menus | 10 seconds |
| 2->1->3 | Description of a third group of level-4 voice menus on the first group of level-3 voice menus on the second group of level-2 voice menus | 10 seconds |

Step 444: The CXMS sends call context information that includes the key sequence of the UEa to an ADDS.

Specifically, the CXMS generates the call context information based on the key sequence information obtained in the foregoing step, and sends an information rendering request message that includes the call context information to the ADDS. The call context information includes the key sequence information. Optionally, the call context information further includes the identifier of the UEa or an identifier of a user corresponding to the UEa. For a method for obtaining, by the CXMS, the identifier of the UEa or the identifier of the user corresponding to the UEa, refer to step 404. Optionally, the call context information further includes a related identifier of the IVR device, for example, a phone number corresponding to the IVR device, and the CXMS may obtain the related identifier of the IVR device from the call signaling.

An example of the information rendering request message is as follows:

| |
|---|
| ```
          RenderInfoRequest{
               ...//Other fields
               "CallContext" {//Call context information
                     "UEID": 13812345678; //Identifier of the UEa
                     "KeySerial": "3->1->4"; //Key sequence
                     "VoiceStartTime": "20200418180002";
//Start time point of the voice service corresponding to
                     the key sequence
                     "VoiceEstEndTime": "20200418180102";
//Theoretical end time point of the voice service
 corresponding to the key sequence
                     }
          }
``` |

Step 445: The ADDS determines a target rendering occasion and/or target advertisement content based on the call context information.

Specifically, the ADDS receives the information rendering request message from the CXMS, obtains the call context information from the information rendering request message, and then determines the target rendering occasion and/or the target advertisement content based on the call context information.

(1) For how to determine the target rendering occasion based on the call context information, an example method is as follows:
The ADDS obtains the start time point of the voice service corresponding to the key sequence from the information rendering request message, sets a start time point of the target rendering occasion based on the start time point, obtains the theoretical end time point of the voice service corresponding to the key sequence from the information rendering request message, and sets an end time point of the target rendering occasion based on the theoretical end time point.

For example, if the start time point of the voice service corresponding to the key sequence is Tvoicestart, and the theoretical end time point of the voice service corresponding to the key sequence is Tvoiceend, the start time point and the end time point of the target rendering occasion may be set as shown in Table 5.

**Table 5**

| Start time point of the target rendering occasion | End time point of the target rendering occasion | Description |
|---|---|---|
| Tvoicestart | Tvoicestart+k*(Tvoiceend-Tvoicestart) | A time range occupied by the target rendering occasion is proportional to a theoretical duration period of the voice service corresponding to the key sequence, where 0<k<1. |
| Tvoicestart+Da | Tvoiceend-Db | The target rendering occasion starts in the theoretical duration period of the corresponding voice service with a delay (the delay is Da, where Da≥0), and ends in advance (an advance is Db, where 0<Db<(Tvoiceend-Tvoicestart)). |
| Tvoicestart | Not determined or to be determined | The end time point is determined by the CXMS, or automatically ends when sending of a video stream is completed. |
| Tvoicestart+Da | Not determined or to be determined | The end time point is determined by the CXMS, or automatically ends when sending of a video stream is completed. |

It should be understood that Table 5 is not exhaustive. A person skilled in the art may set the start time point and the end time point of the target rendering occasion in another manner based on the start time point and the theoretical end time point of the corresponding voice service and this embodiment of this application.

(2) For how to determine the target advertisement content based on the call context information, an example method is as follows:
The ADDS obtains the key sequence information that includes the key sequence and the start time point and the theoretical end time point of the voice service corresponding to the key sequence from the information rendering request message, and determines the target advertisement content based on the key sequence information.

The ADDS may calculate, based on the start time point Tvoicestart and the theoretical end time point Tvoiceend of the voice service corresponding to the key sequence, duration Dplay=Tvoicestart - Tvoiceend of the voice service corresponding to the key sequence, and then use Dplay as one of factors or conditions for determining the target advertisement content. For example, the target advertisement content is selected from advertisement content (similar to the foregoing embodiment, rendering duration of non-video advertisement content such as a picture is considered as 0) whose rendering duration is not greater than Dplay.

The ADDS may further use content of the voice service corresponding to the key sequence as one of factors or conditions for determining the target advertisement content, or determine the target content based on content of the voice service corresponding to the key sequence. For example, the target advertisement content is selected from marketing media content that matches the content of the voice service corresponding to the key sequence. For example, if a key sequence "2->1->3" corresponds to "repair of a faulty wireless router", the ADDS may determine, based on this, that the user may need to replace the wireless router, and then select a publicity web page of a wireless router of a specific brand as the target advertisement content. Therefore, the ADDS may obtain content of the voice service corresponding to each possible key sequence from the IVR device in advance.

In a possible solution, the ADDS may select the target advertisement content from auxiliary media content that matches the content of the voice service corresponding to the key sequence, for example, voice menu description content of the IVR device.

It should be understood that the duration of the voice service corresponding to the key sequence, the content of the voice service, or the like may be merely a factor for determining the target advertisement content, and the ADDS may further determine the target advertisement content with reference to another factor, for example, feature information of the user corresponding to the UEa, location information, plan information, or account information of the UEa. For details, refer to another embodiment of this application.

Step 446: The ADDS returns the target rendering occasion and/or the information about the target advertisement content to the CXMS.

For content of this step, refer to step 406.

Step 447: The CXMS indicates, at the start time point of the target rendering occasion, the MRS to trigger the UEa to start to render the target advertisement content.

For content of this step, refer to step 407.

Step 448: The MRS triggers the UEa to start to render the target advertisement content.

For content of this step, refer to step 408.

In this case, the UEa starts to render the target advertisement content.

If the ADDS previously does not provide the end time point of the target rendering occasion, the end time point may be determined by performing step 449 and step 450. If the ADDS previously provides the end time point of the target rendering occasion, the end time point of the target rendering occasion may be updated by performing step 449 and step 450. In this way, the target advertisement content may be rendered only in an actual duration period (namely, a period from the start time point to an actual end time point of the voice service) of the voice service corresponding to the sequence, to help improve user experience.

During announcement, the end user continues to perform key input, and therefore announcement of the IVR device is interrupted. After receiving a new key sequence from the IVR device, the CXMS may indicate the MRS to trigger the user equipment to end rendering of the advertisement content, determine new target advertisement content based on the new key sequence, and then indicate the MRS to trigger the user equipment to render the new target advertisement content.

Step 449: The CXMS continues to obtain key sequence information (second key sequence information) of the UEa from the IVR device.

For specific content of this step, refer to step 441.

Step 450: The CXMS determines or updates the end time point of the target rendering occasion.

Specifically, the CXMS determines or updates the end time point of the target rendering occasion to a current time point based on the key sequence obtained in step 449, so that the MRS immediately triggers the UEa to stop rendering the target advertisement content. Alternatively, the CXMS directly indicates the MRS to trigger the UEa to stop rendering the target advertisement content, and then goes to step 452.

Step 451: The CXMS indicates, at the end time point of the target rendering occasion, the MRS to trigger the UEa to stop rendering the target advertisement content.

For content of this step, refer to step 411.

Step 452: The MRS triggers the UEa to stop rendering the target advertisement content.

For content of this step, refer to step 412.

Similar to another method procedure described above, step 451 and step 452 are optional steps.

In the method procedure corresponding to FIG. 4C(1) and FIG. 4C(2), the advertisement content and/or the rendering occasion are/is determined based on the key sequence of the user equipment, so that there may be a higher correlation between rendering of the advertisement content and a user operation. In this way, the user pays more attention to the advertisement content, and an advertisement conversion rate is increased, to improve utilization of network resources of the operator.

FIG. 4D(1) and FIG. 4D(2) are a diagram of a fourth method procedure for rendering advertisement content in a call process according to an embodiment of this application. The method procedure is implemented based on the architecture shown in FIG. 3. A correspondence between each participant and the entity in FIG. 3 is shown by a reference mark in FIG. 4D(1) and FIG. 4D(2). For example, an "IVR device" in the method procedure is the IVR device 308 in FIG. 3. In the method procedure, call context information includes predicted call duration of a call service, and is used as one of bases for determining target advertisement content and a target rendering occasion. Main steps are as follows:
Step 460: UEa and UEb start a call service.

For content of this step, refer to step 400.

Step 461: A CXMS receives call signaling (first call signaling) of the call service from an IMS network.

For content of this step, refer to step 401.

Optionally, only when determining that the call signaling is callee pickup signaling (which means that the two parties are to enter a call status), the CXMS may continue to perform subsequent steps in the method procedure. Otherwise, the CXMS continues to perform step 461.

Step 462: The CXMS obtains subscription information of the UEa from an HSS.

For content of this step, refer to step 402.

Step 463: The CXMS obtains predicted call duration of the call service from a DAS.

The CXMS obtains the predicted call duration based on the call signaling. Details are as follows:
The CXMS parses the call signaling, and obtains an identifier of the UEa and an identifier of the UEb from the call signaling;
the CXMS sends a prediction request message to the DAS, where the prediction request message includes the identifier of the UEa and the identifier of the UEb;
the DAS receives the prediction request message, obtains the identifier of the UEa and the identifier of the UEb from the prediction request message, obtains a historical call duration record between the UEa and the UEb, and then predicts call duration, namely, the predicted call duration of the call service, of the current call service between the UEa and the UEb based on the historical call duration record; and
the DAS sends a prediction response message to the CXMS, where the prediction response message includes the predicted call duration.

In a possible implementation, a function of the DAS in this step may be deployed in the CXMS.

It should be understood that the DAS may predict the call duration of the call service based on a historical call duration record between the UEa and other user equipment. In this case, the CXMS may not add the identifier of the UEb to the prediction request message.

It should be noted that the DAS device should use a historical call duration record of a user under the condition that local policies and regulations are met, for example, explicit permission is obtained from the user. In this embodiment of this application, for a case that may involve private data of the user, refer to the description herein.

Step 464: The CXMS sends call context information that includes the predicted call duration of the call service to an ADDS.

Specifically, the CXMS generates the call context information based on the predicted call duration obtained in step 463, and sends an information rendering request message that includes the call context information to the ADDS. The call context information includes the predicted call duration. Optionally, the call context information further includes the identifier of the UEa or an identifier of a user corresponding to the UEa. For a method for obtaining, by the CXMS, the identifier of the UEa or the identifier of the user corresponding to the UEa, refer to step 404. Optionally, the call context information may further include a current call status of the UEa. For a method for obtaining, by the CXMS, the call status of the UEa, refer to step 403.

An example of the information rendering request message is as follows:

| |
|---|
| ```
          RenderInfoRequest{
               ...//Other fields
               "CallContext" } {//Call context information
                     "UEID": 13812345678; //Identifier of the UEa
                     "CallStatus": 180; //Call status
                     "EstDuration": 600; //The predicted call duration is 10 minutes
               }
          }
``` |

Step 465: The ADDS determines a target rendering occasion and/or target advertisement content based on the call context information.

Specifically, the ADDS receives the information rendering request message from the CXMS, obtains the call context information from the information rendering request message, and then determines the target rendering occasion and/or the target advertisement content based on the call context information. Specifically, the ADDS obtains the predicted call duration, of the call service, assumed to be Dest from the call context information, and then determines the target rendering occasion and/or the target advertisement content for the UEa based on Dest.

(1) For how to determine the target rendering occasion based on Dest, an example method is as follows:
The ADDS may set a start time point and an end time point of the target rendering occasion based on a current time point and the predicted call duration. For example, the ADDS may determine the target rendering occasion based on Table 6.

**Table 6**

| Start time point of the target rendering occasion | End time point of the target rendering occasion | Description |
|---|---|---|
| Tcur | Tcur+k*Dest | The target rendering occasion is set in a start time period of the call service, where 0<k<1. |
| Tcur+0.5*Dest-0.5*k*Dest | Tcur+0.5 *Dest+0.5 *k*Dest | The target rendering occasion is set in a middle time period of the call service, where 0<k<1. |
| Tcur+Dest-k*Dest | Tcur+Dest | The target rendering occasion is set in an end time period of the call service, where 0<k<1. |
| Tcur | None | When the target advertisement content is video content, the end time point of the target rendering occasion may be empty (not set to a specific value). |
| Tcur+0.5*Dest-0.5*k*Dest | None | |
| Tcur+Dest-k*Dest | None | |

It should be understood that Table 6 is not exhaustive. A person skilled in the art may set the start time point and the end time point of the target rendering occasion in another manner based on the current time point, the predicted call duration, and this embodiment of this application.

Dest is merely the predicted call duration, and actual call duration may be much less than Dest. Therefore, the call service may end or is about to end before some of the start time points shown in Table 6 arrive. In this case, the CXMS may cancel a plan of triggering, on the corresponding target rendering occasion, the UEa to render the target advertisement content, and the method procedure ends. After canceling the plan, the CXMS may further obtain a new target rendering occasion and/or new target advertisement content based on actual call duration in response to call signaling related to call termination, to indicate an MRS to trigger the UEa to render the target advertisement content. For details, refer to related description in the method procedure corresponding to FIG. 4B(1) and FIG. 4B(2).

(2) For how to determine the target advertisement content based on Dest, an example method is as follows:
The ADDS may preset a proportional coefficient k (where 0<k<1, and a telecommunications operator or an advertiser may dynamically adjust a value of k based on a market response status), use k*Dest as target rendering duration, and then select the target advertisement content from advertisement content (similar to the foregoing embodiment, rendering duration of non-video advertisement content such as a picture is considered as 0) whose rendering duration is not greater than k^{∗}Dest.

It should be understood that the rendering duration of the target advertisement content may not be directly proportional to the predicted duration, and there may be another non-linear relationship. For example, a manner of a piecewise function or a step function may be used (for example, if 5 minutes<Dest<10 minutes, the duration of the target advertisement content is 5 seconds, or if 10 minutes<Dest<15 minutes, the duration of the target advertisement content is 10 seconds).

Similar to step 405, the predicted call duration is merely a factor for determining the target advertisement content, and the ADDS may further determine the target advertisement content with reference to another factor. For example, the ADDS may further request feature information of the user corresponding to the UEa from the DAS, and then use the feature information as a factor or a condition for determining the target advertisement content. If the feature information of the user obtained by the ADDS is a "worker", advertisement content of a product suitable for the worker is preferentially selected. For another example, the ADDS may further obtain call status information of the UEa from the call context information, and may select the target advertisement content from advertisement content with a sound when determining that the UEa is in a call phase of "before a call".

It should be understood that the ADDS may not determine the target advertisement content, and may not return information about the target advertisement content to the CXMS. In this case, the CXMS may subsequently determine the target advertisement content.

Similar to step 405, the ADDS may first determine the target rendering occasion, and then determine the target advertisement content based on the determined target rendering occasion. For example, if the target rendering occasion is set in the middle time period or the end time period (corresponding to the call phase) of the call service, the target advertisement content may be selected from advertisement content such as advertisement content, of a video type, without a sound, an HTML page, or a picture, to avoid a case in which advertisement content with a sound affects call experience of the user.

Step 466: The ADDS returns the target rendering occasion and/or the information about the target advertisement content to the CXMS.

For content of this step, refer to step 406.

Step 467: The CXMS indicates, at the start time point of the target rendering occasion, the MRS to trigger the UEa to start to render the target advertisement content.

For content of this step, refer to step 407. A difference is that the start time point of the target rendering occasion herein may be a future time point. In this case, the CXMS may start a timer, to send indication information to the MRS when the start time point of the target rendering occasion arrives, so as to indicate the MRS to trigger the UEa to render the target advertisement content.

Step 468: The MRS triggers the UEa to start to render the target advertisement content.

For content of this step, refer to step 408.

In this case, the UEa starts to render the target advertisement content.

If the ADDS previously does not provide the end time point of the target rendering occasion, the end time point may be determined by performing step 469 and step 470. If the ADDS previously provides the end time point of the target rendering occasion, optionally, the end time point of the target rendering occasion is updated by performing step 469 and step 470. In this way, a time point at which the target advertisement content is rendered may not be later than a time point at which the call ends, to meet a requirement of the end user who does not want to still render the advertisement content after the call ends.

Step 469: The CXMS continues to receive call signaling (second call signaling) of the call service from the IMS network.

For specific content of this step, refer to step 409.

Step 470: The CXMS determines or updates the end time point of the target rendering occasion.

Specifically, if determining, based on the call signaling obtained in step 469, that the UEa is still in the call status, the CXMS keeps the end time point of the target rendering occasion previously provided by the ADDS unchanged. If determining that the call of the UEa ends, the CXMS updates the end time point of the target rendering occasion to the current time point, so that the MRS immediately triggers the UEa to stop rendering the target advertisement content. Alternatively, the CXMS directly indicates the MRS to trigger the UEa to stop rendering the target advertisement content, and then goes to step 472.

Step 471: The CXMS indicates, at the end time point of the target rendering occasion, the MRS to trigger the UEa to stop rendering the target advertisement content.

For content of this step, refer to step 411.

Step 472: The MRS triggers the UEa to stop rendering the target advertisement content.

For content of this step, refer to step 412.

Similar to another method procedure described above, step 471 and step 472 are optional steps.

In the method procedure corresponding to FIG. 4D(1) and FIG. 4D(2), the advertisement content and/or the rendering occasion are/is determined based on the predicted call duration, so that there is a positive correlation between the rendering duration of the advertisement content and the predicted call duration. In this way, acceptance of the user to the advertisement content may be improved to some extent, and an advertising effect may be improved, to improve utilization of network resources of the operator.

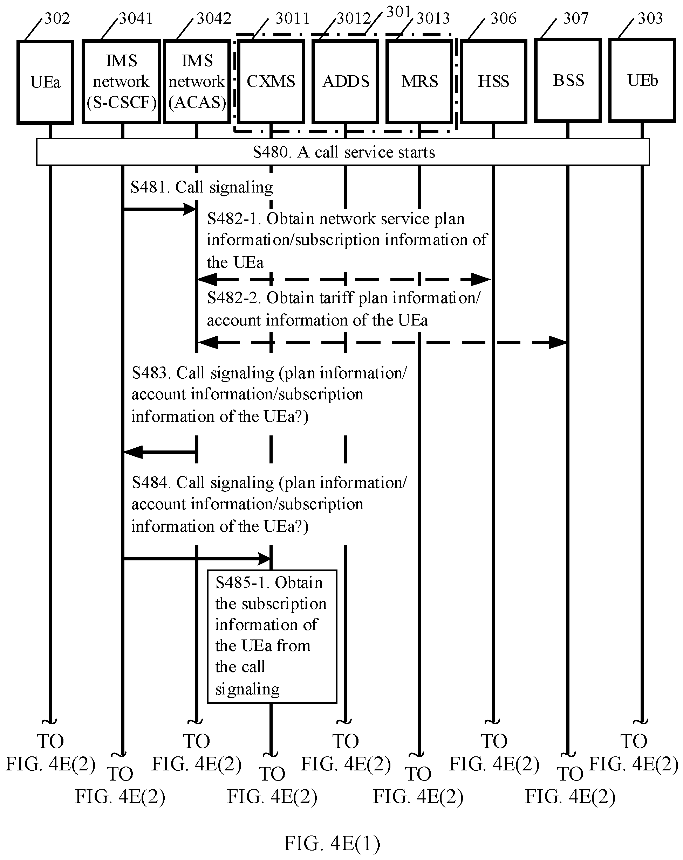

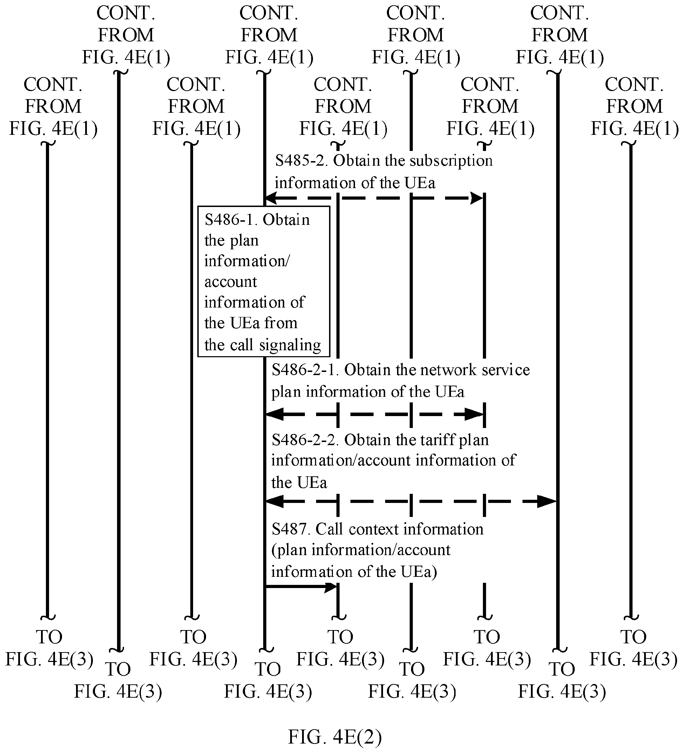

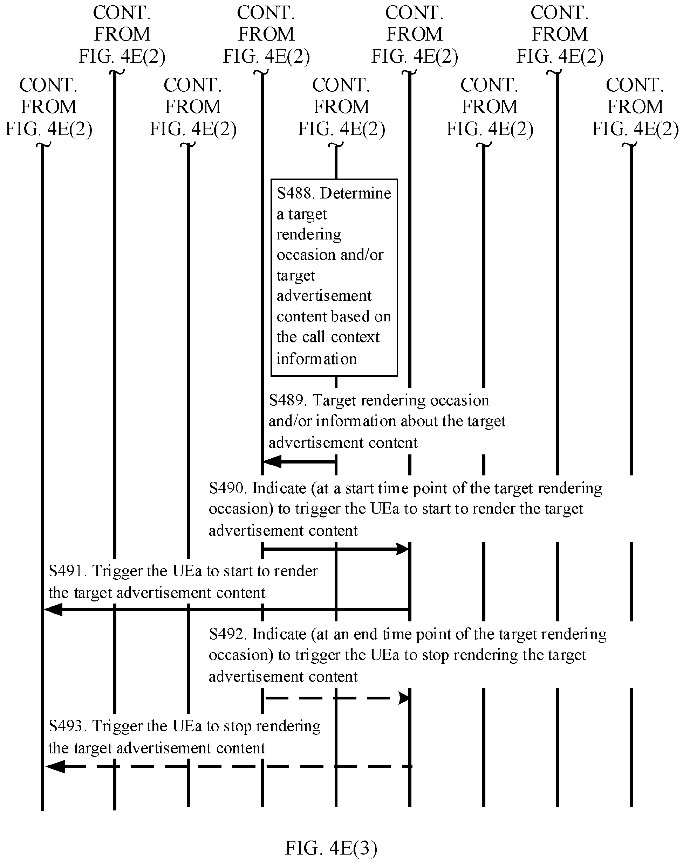

FIG. 4E(1), FIG. 4E(2), and FIG. 4E(3) are a diagram of a fifth method procedure for rendering advertisement content in a call process according to an embodiment of this application. The method procedure is implemented based on the architecture shown in FIG. 3. A correspondence between each participant and the entity in FIG. 3 is shown by a reference mark in FIG. 4E(1), FIG. 4E(2), and FIG. 4E(3). For example, a "BSS" in the method procedure is the BSS 307 in FIG. 3. In the method procedure, plan information or account information of user equipment is used as one of bases for determining target advertisement content and a target rendering occasion. Main steps are as follows:
Step 480: UEa and UEb start a call service.

For content of this step, refer to step 400.

Step 481 to step 483: An S-CSCF device obtains plan information/account information/subscription information of the UEa from an ACAS.

Step 481: The S-CSCF device sends call signaling of the call service to the ACAS.

Step 482-1: The ACAS obtains an identifier of the UEa from the call signaling, and obtains network service plan information, for example, VPN (virtual private network, virtual private network) plan information, of the UEa and the subscription information of the UEa from an HSS based on the identifier of the UEa.

Step 482-2: The ACAS obtains tariff plan information, for example, monthly plan information, and the account information, for example, an account balance and an arrear status, of the UEa from the BSS based on the identifier of the UEa.

The plan information includes a remaining plan validity period, a plan balance, and the like. This is not limited in this embodiment of this application.

Step 483: The ACAS sends the obtained plan information/account information/subscription information to the S-CSCF device by using the call signaling.

Subsequently, the S-CSCF device may send, to a CXMS by using the call signaling, the plan information and the subscription information sent by the ACAS.

Step 484: The CXMS receives the call signaling of the call service from an IMS network.

Specifically, in a process of implementing the call service, the CXMS receives call signaling related to the call service from the S-CSCF device, and the CXMS obtains the subscription information (described in step 485-1 or step 485-2) and the plan information/account information (described in step 486-1 or step 486-2) of the UEa in response to the call signaling.

Step 485-1: The CXMS obtains the subscription information of the UEa from the call signaling.

Specifically, if the call signaling in step 484 includes the subscription information of the UEa, the subscription information of the UEa is obtained from the call signaling.

Step 485-2: The CXMS obtains the subscription information of the UEa from the HSS.

Specifically, if the call signaling in step 484 does not include the subscription information of the UEa, the identifier of the UEa is obtained from the call signaling, and the subscription information of the UEa is obtained from the HSS based on the identifier of the UEa.

The CXMS determines, based on the obtained subscription information of the UEa, that a user agrees to render advertisement content in a call process, and continues to perform subsequent steps.

Step 486-1: The CXMS obtains the plan information/account information of the UEa from the call signaling.

Specifically, if the call signaling in step 484 includes the plan information or the account information of the UEa, the plan information/account information of the UEa is obtained from the call signaling.

Step 486-2-1: The CXMS obtains the network service plan information of the UEa from the HSS.

Specifically, if the call signaling in step 484 does not include the network service plan information of the UEa, the identifier of the UEa is obtained from the call signaling, and the network service plan information, for example, the VPN plan information, of the UEa is obtained from the HSS based on the identifier of the UEa.

Step 486-2-2: The CXMS obtains the tariff plan information/account information, for example, the monthly plan information, of the UEa from the BSS.

Specifically, if the call signaling in step 484 does not include the tariff plan information or the account information of the UEa, the identifier of the UEa is obtained from the call signaling, and the tariff plan information (for example, data traffic plan information) or the account information of the UEa is obtained from the BSS based on the identifier of the UEa.

The plan information may include a plan balance or remaining plan validity period information.

Step 487: The CXMS sends call context information that includes the plan information/account information of the UEa to an ADDS.

Specifically, the CXMS generates the call context information based on the plan information/account information obtained in the foregoing step, and sends an information rendering request message that includes the call context information to the ADDS. The call context information includes the plan information/account information, the plan information includes the plan balance or the remaining plan validity period, and the account information includes the account balance. Optionally, the call context information further includes the identifier of the UEa or an identifier of the user corresponding to the UEa. For a method for obtaining, by the CXMS, the identifier of the UEa or the identifier of the user corresponding to the UEa, refer to step 404. Optionally, the call context information may further include a call status of the UEa. For a method for obtaining, by the CXMS, the call status of the UEa, refer to step 403.

An example of the information rendering request message is as follows:

| |
|---|
| ```
          RenderInfoRequest{
               "CallContext" {//Call context information
                   "UEID": 13812345678; //Identifier of the UEa
                   "Balance": 10; //Account balance, or
                   "LeftValidDayInPlan": 10; //Remaining plan validity period, or
                   "LeftCountInPlan": 15; //Plan balance
                   }
          }
``` |

Step 488: The ADDS determines a target rendering occasion and/or target advertisement content based on the call context information.

Specifically, the ADDS receives the information rendering request message from the CXMS, obtains the call context information from the information rendering request message, and then determines the target rendering occasion and/or the target advertisement content based on the call context information. Specifically, the ADDS obtains the plan information or the account information of the UEa from the call context information, and then determines the target rendering occasion and/or the target advertisement content for the UEa based on the plan information or the account information.

(1) For how to determine the target rendering occasion based on the plan information or the account information of the UEa, an example method is as follows:
The ADDS may obtain the plan balance or the remaining plan validity period from the plan information, determine urgency of plan renewal or account recharge based on the plan balance or the remaining plan validity period, and then determine the target rendering occasion based on the urgency. For example, if the remaining plan validity period of the UEa is 1 month, the target rendering occasion may be set at an end of the call service, that is, a start time point of the target rendering occasion is a time point at which a call ends. In this way, a reminder function is implemented, and interference to call experience is minimized. If the remaining plan validity period of the UEa is only 7 days, a start time point of the target rendering occasion may be set to a time point at which dialing starts. In this way, it may be more likely to attract attention of the user, and the user may renew a plan or change a plan in a timely manner. Similarly, the ADDS may obtain the account balance from the account information, and then determine the target rendering occasion based on different balance amounts. For example, when the remaining balance exceeds a threshold (for example, 50 yuan), the target rendering occasion is set at an end of the call service. When the balance is less than the threshold, the target rendering occasion is set at the beginning of the call service.

It should be understood that the ADDS may not determine the target rendering occasion. In this case, the CXMS may subsequently determine the target rendering occasion.

It should be understood that the ADDS may alternatively determine the target advertisement content and the target rendering occasion with reference to a call status of the UEa, predicted call duration, or existing call duration. For a specific method, refer to another method procedure provided in the embodiments of this application.

(2) For how to determine the target advertisement content based on the plan information or the account information of the UEa, an example method is as follows:
The ADDS may select the target advertisement content from advertisement content (for example, a video for describing renewal of the plan of the UEa, a video for describing an alternative solution to the plan of the UEa, a video for describing an account recharge mode, or a video for describing an account recharge preferential regime) that matches the plan information or the account information. There are many methods for matching advertisement content and the plan information or the account information. For example, a similarity between a keyword or metadata information of the advertisement content and a plan name or a keyword is calculated, or a similarity between a keyword or metadata information of the advertisement content and a keyword of an account recharge service is calculated, and when the similarity exceeds a preset threshold, it is determined that the advertisement content "matches" the plan information or the account information.

Similar to step 405, the plan information/account information of the UEa is merely a factor for determining the target advertisement content, and the ADDS may further determine the target advertisement content with reference to another factor. For example, the ADDS may further determine the target advertisement content with reference to the call status of the UEa. If determining, based on the call status of the UEa, that the call service ends, the ADDS selects the target advertisement content from advertisement content with a sound. The ADDS may further determine the target advertisement content with reference to feature information of the user. For example, if a feature of the user is a "young user", the target advertisement content is selected from promotion video content of a plan suitable for the young user.

Step 489: The ADDS returns the target rendering occasion and/or the information about the target advertisement content to the CXMS.

For content of this step, refer to step 406.

Step 490: The CXMS indicates, at the start time point of the target rendering occasion, an MRS to trigger the UEa to start to render the target advertisement content.

For content of this step, refer to step 407.

Optionally, before the start time point of the target rendering occasion arrives, the CXMS may further continue to obtain the plan information of the UEa from the S-CSCF device, the BSS, or the HSS, or obtain the account information of the UEa from the BSS (for details, refer to step 486-1, step 486-2-1, step 486-2-2, or the like), and cancel, when finding that the plan information or the account information of the UEa changes, for example, account recharge or plan renewal, a plan of triggering, on the target rendering occasion, the UEa to render the target advertisement content. In this case, the method procedure ends.

Step 491: The MRS triggers the UEa to start to render the target advertisement content.

For content of this step, refer to step 408.

Step 492: The CXMS indicates, at an end time point of the target rendering occasion, the MRS to trigger the UEa to stop rendering the target advertisement content.

For content of this step, refer to step 411.

Step 493: The MRS triggers the UEa to stop rendering the target advertisement content.

For content of this step, refer to step 412.

Similar to another method procedure described above, step 492 and step 493 are optional steps.

In the method procedure corresponding to FIG. 4E(1), FIG. 4E(2), and FIG. 4E(3), the advertisement content and/or the rendering occasion in the call service process are/is determined based on the plan information/account information of the user equipment. In this way, a case in which a communications service of the user is interrupted due to costs may be avoided in a timely manner, to help improve user experience and improve utilization of network resources of an operator.

FIG. 4F(1) and FIG. 4F(2) are a diagram of a sixth method procedure for rendering advertisement content in a call process according to an embodiment of this application. The method procedure is implemented based on the architecture shown in FIG. 3. A correspondence between each participant and the entity in FIG. 3 is shown by a reference mark in FIG. 4F(1) and FIG. 4F(2). For example, an "HSS" in the method procedure is the HSS 306 in FIG. 3. In the method procedure, location information of user equipment is used as one of bases for determining target advertisement content and a target rendering occasion. Main steps are as follows:
Step 4A0: UEa and UEb start a call service.

For content of this step, refer to step 400.

Steps 4A1 to 4A3: An S-CSCF device obtains location information/subscription information of the UEa from an ACAS.

Step 4A1: The S-CSCF device sends call signaling of the call service to the ACAS.

Step 4A2: The ACAS obtains an identifier of the UEa from the call signaling, and obtains the location information and the subscription information of the UEa from the HSS based on the identifier of the UEa.

The location information in this embodiment of this application may be information related to longitude and latitude of a location of the user equipment, may be an identifier or a name of a city or an area in which the user equipment is located, may be a name or an identifier of a street, a place, or a building in which the user equipment is located, may be two-dimensional coordinates (GPS positioning), or may be three-dimensional coordinates (indoor positioning). Content and a form of the location information are not limited in this embodiment of this application. Details are not subsequently described.

Step 4A3: The ACAS sends the obtained location information/subscription information to the S-CSCF device by using the call signaling.

Subsequently, the S-CSCF device may send, to a CXMS by using the call signaling, the location information and the subscription information sent by the ACAS.

Step 4A4: The CXMS receives the call signaling of the call service from an IMS network.

Specifically, in a process of implementing the call service, the CXMS receives call signaling related to the call service from the S-CSCF device, and the CXMS obtains the subscription information (described in step 4A5-1 or step 4A5-2) and the location information (described in step 4A6-1 or step 4A6-2) of the UEa in response to the call signaling.

Step 4A5-1: The CXMS obtains the subscription information of the UEa from the call signaling.

Specifically, if the call signaling in step 4A4 includes the subscription information of the UEa, the subscription information of the UEa is obtained from the call signaling.

Step 4A5-2: The CXMS obtains the subscription information of the UEa from the HSS.

Specifically, if the call signaling in step 4A4 does not include the subscription information of the UEa, the identifier of the UEa is obtained from the call signaling, and the subscription information of the UEa is obtained from the HSS based on the identifier of the UEa.

The CXMS determines, based on the obtained subscription information of the UEa, that a user agrees to render advertisement content in a call process, and continues to perform subsequent steps.

Step 4A6-1: The CXMS obtains the location information of the UEa from the call signaling.

Specifically, if the call signaling in step 4A4 includes the location information of the UEa, the location information of the UEa is obtained from the call signaling.

Step 4A6-2: The CXMS obtains the location information of the UEa from the HSS.

Specifically, if the call signaling in step 4A4 does not include the location information of the UEa, the location information of the UEa is obtained from the HSS based on the call signaling. Specifically, the CXMS obtains the identifier of the UEa from the call signaling, and queries the HSS based on the identifier of the UEa, to obtain the location information of the UEa.

Step 4A7: The CXMS sends call context information that includes the location information of the UEa to an ADDS.

Specifically, the CXMS generates the call context information based on the location information obtained in the foregoing step, and sends an information rendering request message that includes the call context information to the ADDS. The call context information includes the location information. Optionally, the call context information further includes the identifier of the UEa or an identifier of the user corresponding to the UEa. For a method for obtaining, by the CXMS, the identifier of the UEa or the identifier of the user corresponding to the UEa, refer to step 404. Optionally, the call context information may further include a current call status of the UEa. For a method for obtaining, by the CXMS, the call status of the UEa, refer to step 403.

An example of the information rendering request message is as follows:

| |
|---|
| ```
          RenderInfoRequest{
               "CallContext" {//Call context information
                   "UEID": 13812345678; //Identifier of the UEa
                   "Location" {
                       "Longitude": 110
                       "Latitude": 35
                   }
                   "CallStatus": 180; //Call status (optional)
               }
          }
``` |

Step 4A8: The ADDS determines a target rendering occasion and/or target advertisement content based on the call context information.

Specifically, the ADDS receives the information rendering request message from the CXMS, obtains the call context information from the information rendering request message, and then determines the target rendering occasion and/or the target advertisement content based on the call context information. Specifically, the ADDS obtains the location information from the call context information, and determines the target rendering occasion and/or the target advertisement content based on the location information.

(1) For how to determine the target advertisement content based on the location information of the UEa, an example method is as follows:
The ADDS may select the target advertisement content from advertisement content related to a business place related to the location information. For example, when determining that the location information of the UEa falls within an area range, the ADDS may select the target advertisement content from advertisement content (for example, a promotion advertisement in a shopping mall, or a public service advertisement in the area range, for example, a public service advertisement for garbage sorting) of a merchant in the area range.

Similar to step 405, the location information is merely a factor for determining the target advertisement content, and the ADDS may further determine the target advertisement content with reference to another factor. For example, the ADDS may further request feature information of the user corresponding to the UEa from a DAS, and then use the feature information as a factor or a condition for determining the target advertisement content. If the feature information of the user obtained by the ADDS is a "taxi driver", advertisement content of a product suitable for the taxi driver is preferentially selected. For another example, the ADDS may further determine the target advertisement content with reference to the call status of the UEa. If determining, based on the call status of the UEa, that the UEa is on a call, the ADDS may select advertisement content without a sound.

(2) For how to determine the target rendering occasion based on the location information of the UEa, an example method is as follows:
The ADDS may record the location information of the UEa, to form a historical location information record (with the consent of the user and in compliance with relevant regulations), then determine "freshness" (accumulated duration at a location, where shorter duration indicates a higher degree of freshness) or "frequency" (a quantity of times the UEa appears at a location in a unit time) of the UEa at the location, and determine the target rendering occasion based on the freshness or frequency of the UEa at the location (namely, a geographical location corresponding to the location information). For example, if the UEa enters a location for the first time, a start time point of the target rendering occasion may be set to a time point at which dialing starts, for example, the corresponding advertisement content is set to "an operator XXX welcomes you". In this way, an immersive feeling of the user may be improved. If the UEa enters a location for a plurality of times, a start time point of the target rendering occasion may be set to a time point at which the call ends. Therefore, the ADDS may record the location information of the UEa, and determine the freshness based on this.

It should be understood that the ADDS may alternatively determine the target advertisement content and the target rendering occasion with reference to the call status of the UEa, predicted call duration, existing call duration, plan information, account information, or the like. For a specific method, refer to the foregoing method procedure.

Step 4A9: The ADDS returns the target rendering occasion and/or the information about the target advertisement content to the CXMS.

For content of this step, refer to step 406.

Step 4B0: The CXMS indicates, at the start time point of the target rendering occasion, an MRS to trigger the UEa to start to render the target advertisement content.

For content of this step, refer to step 407.

Optionally, before the start time point of the target rendering occasion arrives, the CXMS may further continue to obtain the location information of the UEa from the S-CSCF device or the HSS (for details, refer to step 4A6-1, step 4A6-2, or the like), and cancel, when finding that the location information of the UEa changes (the UEa leaves a previous location), a plan of triggering, on the target rendering occasion, the UEa to render the target advertisement content. In this case, the method procedure ends.

Step 4B1: The MRS triggers the UEa to start to render the target advertisement content.

For content of this step, refer to step 408.

Step 4B2: The CXMS indicates, at an end time point of the target rendering occasion, the MRS to trigger the UEa to stop rendering the target advertisement content.

For content of this step, refer to step 411.

Step 4B3: The MRS triggers the UEa to stop rendering the target advertisement content.

For content of this step, refer to step 412.

Similar to another method procedure described above, step 4B2 and step 4B3 are optional steps.

In the method procedure corresponding to FIG. 4F(1) and FIG. 4F(2), the advertisement content and/or the rendering occasion are/is determined based on the location information of the user equipment, so that immersive experience may be provided for the user. In this way, the user pays more attention to the advertisement content, and an advertisement conversion rate is increased, to improve utilization of network resources of an operator.

In FIG. 4A(1) and FIG. 4A(2) to FIG. 4F(1) and FIG. 4F(2), a function of determining the target rendering occasion is deployed in the ADDS, and may be deployed in the CXMS in the work allocation manner shown in FIG. 1B and FIG. 2B(1) and FIG. 2B(2). The CXMS, the ADDS, the DAS, and the MRS are separately deployed, and may be deployed in a same physical device in the manner shown in FIG. 1A and FIG. 2A. Alternatively, the CXMS, the ADDS, and the DAS may be deployed in one physical device, and the MRS is deployed in another physical device. A manner of deploying the CXMS, the ADDS, the DAS, and the MRS is not limited in the embodiments of this application.

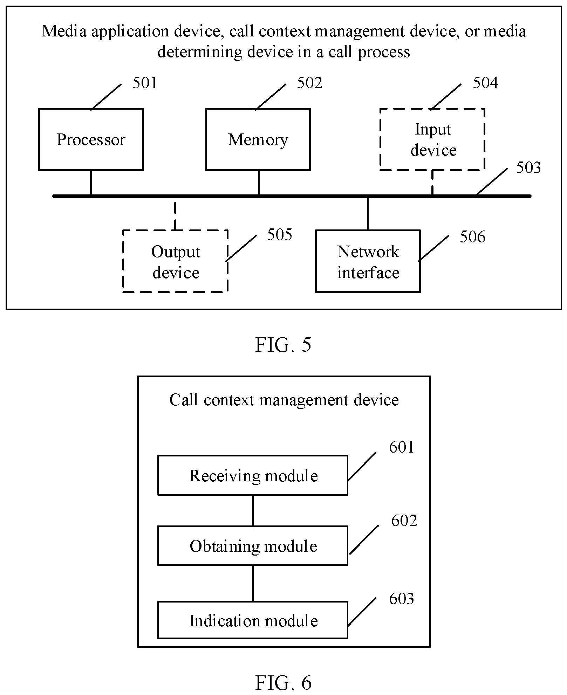

FIG. 5 is a diagram of a hardware structure of a media application device, a call context management device, or a media determining device according to an embodiment of this application. All media application devices (for example, the media application device 110 in FIG. 1A), call context management devices (for example, the call context management device 111 in FIG. 1B, the call context management device 114 in FIG. 1C, and the CXMS 3011 in FIG. 3), and media determining devices (for example, the media determining device 112 in FIG. 1B, the media determining device 115 in FIG. 1C, and the ADDS 3012 in FIG. 3) in the embodiments of this application may be implemented by using a general-purpose computer hardware structure shown in FIG. 5. The hardware structure includes a processor 501, a memory 502, a bus 503, an input device 504, an output device 505, and a network interface 506. The input device 504 and the output device 505 are optional.

Specifically, the memory 502 may include a computer storage medium in a form of a volatile and/or nonvolatile memory, for example, a read-only memory and/or a random access memory. The memory 502 can store an operating system, an application program, another program module, executable code, and program data.

The input device 504 may be configured to input information, so that a system administrator performs an operation, management, and the like on the media application device, the call context management device, or the media determining device, for example, manages to-be-rendered media content on the media application device, configures an IP address of the media determining device on the call context management device, and configures various thresholds on the media determining device. The input device 504 may be a keyboard or a pointing device, for example, a mouse, a trackball, a touchpad, a microphone, a joystick, a game pad, a satellite television antenna, a scanner, or a similar device, and may be connected to the processor 501 by using the bus 503.

The output device 505 may be configured to output information, so that the system administrator performs an operation, management, and the like on the media application device, the call context management device, or the media determining device, for example, displays storage space on the media application device, displays the IP address of the media determining device on the call context management device, and displays various thresholds on the media determining device. In addition to a monitor, the output device 505 may be another peripheral output device, for example, a speaker and/or a printing device, and may be connected to the processor 501 by using the bus 503.

The media application device, the call context management device, or the media determining device may be connected to a network through the network interface 506, for example, connected to a local area network (Local Area Network, LAN). In a networking environment, computer-executable instructions stored in the media application device, the call context management device, or the media determining device may be stored in a remote storage device and are not limited to being locally stored.

When the processor 501 in the media application device executes the executable code or the application program stored in the memory 502, the media application device may perform the method steps corresponding to the media application device in all the foregoing embodiments, for example, steps 202, 203, and 204. For a specific execution process, refer to the foregoing embodiments. Details are not described herein.

When the processor 501 in the call context management device executes the executable code or the application program stored in the memory 502, the call context management device may perform the method steps corresponding to the call context management device in all the foregoing embodiments, for example, steps 222, 223, 224, 242, 243, 403, 425, 443, 463, 486-1, and 4A6-1. For a specific execution process, refer to the foregoing embodiments. Details are not described herein.

When the processor 501 in the media determining device executes the executable code or the application program stored in the memory 502, the media determining device may perform the method steps corresponding to the media determining device in all the foregoing embodiments, for example, steps 225-1, 225-2, 244, 405, 427, 445, 465, 488, and 4A8. For a specific execution process, refer to the foregoing embodiments. Details are not described herein.

FIG. 6 is a schematic diagram of a logical structure of a call context management device according to an embodiment of this application. The call context management device is configured to: obtain call context information, and enable, based on the call context information, user equipment to render media content in a call service process, and includes a receiving module 601, an obtaining module 602, and an indication module 603.

The receiving module 601 is configured to receive call signaling of a call service from a call session control device.

The obtaining module 602 is configured to obtain call context information based on the call signaling. The call context information includes information used to describe progress of user equipment participating in the call service in a call service process or an environment in which user equipment is located in a call service process. For a specific execution process, refer to the description of the steps on the side of the call context management device in the foregoing embodiments, for example, steps 242, 403, and 425.

The indication module 603 is configured to indicate, based on the call context information, a media rendering device to trigger the user equipment 12 to render media content. For a specific execution process, refer to the description of the steps on the side of the call context management device in the foregoing embodiments, for example, steps 246, 407, and 447.

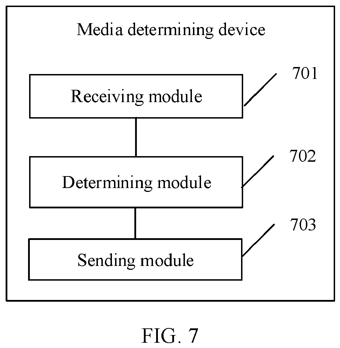

FIG. 7 is a schematic diagram of a logical structure of a media determining device according to an embodiment of this application. The media determining device is configured to determine an occasion for rendering media content and/or to-be-rendered media content for a call context management device, and includes a receiving module 701, a determining module 702, and a sending module 703.

The receiving module 701 is configured to receive call context information from the call context management device 114. The call context information is information used to describe progress of user equipment 12 participating in a call service in a call service process or an environment in which user equipment 12 is located in a call service process. For a specific execution process, refer to the description of the steps on the side of the media determining device in the foregoing embodiments, for example, steps 243, 404, and 426.

The determining module 702 is configured to determine a target rendering occasion and/or target media content based on the call context information. For a specific execution process, refer to the description of the steps on the side of the media determining device in the foregoing embodiments, for example, steps 244, 405, and 427.

The sending module 703 is configured to send the target rendering occasion and/or information about the target media content to the call context management device 114, so that the call context management device triggers the user equipment to render the target media content on the target rendering occasion. For a specific execution process, refer to the description of the steps on the side of the media determining device in the foregoing embodiments, for example, steps 245, 406, 428, and 446.

The call context management device shown in FIG. 6 and the media determining device shown in FIG. 7 are presented in a form of a functional module. The "module" herein may be an application-specific integrated circuit (application-specific integrated circuit, ASIC), a circuit, a processor that executes one or more software programs or firmware programs and a memory, an integrated logic circuit, and/or another component that can provide the foregoing function. In a simple embodiment, a person skilled in the art may appreciate that these devices may be in a form shown in FIG. 5. For example, all of the obtaining module 602, the indication module 603, the receiving module 701, the determining module 702, and the sending module 703 may be implemented by the processor 501 and the memory 502 in FIG. 5. For example, both a function of obtaining the call context information by the obtaining module 602 and a function of determining the target rendering occasion and/or the target media content by the determining module 702 may be implemented by the processor 501 by executing the code stored in the memory 502.

It may be clearly understood by a person of ordinary skill in the art that, for ease and brief description, for a detailed working process of the foregoing system, apparatus, and unit, refer to a corresponding process in the foregoing method embodiments, and details are not described herein again.

In the several embodiments provided in this application, it should be understood that the disclosed system, device, and method may be implemented in other manners. For example, the module division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A method for rendering media content, comprising:
receiving call signaling of a call service from a call session control device;
obtaining call context information based on the call signaling, wherein the call context information comprises information used to describe progress of user equipment in the call service in a call service process; and
enabling, based on the call context information, the user equipment to render media content.

2. The method for rendering media content according to claim 1, wherein the enabling, based on the call context information, the user equipment to render media content comprises:
triggering, based on the call context information, the user equipment to render target media content on a target rendering occasion.

3. The method for rendering media content according to claim 2, wherein the call context information comprises call status information of the user equipment, and the call status information comprises a call status of the user equipment, a start time point of the call status, and a theoretical end time point of the call status;
the obtaining call context information based on the call signaling comprises: determining the call status of the user equipment based on a signaling code or a status code in the call signaling; and
the triggering, based on the call context information, the user equipment to render target media content on a target rendering occasion comprises: obtaining the start time point of the call status, setting a start time point of the target rendering occasion based on the start time point of the call status, and setting an end time point of the target rendering occasion based on the theoretical end time point.

4. The method for rendering media content according to claim 3, wherein the triggering, based on the call context information, the user equipment to render target media content on a target rendering occasion further comprises:
selecting the target media content from media content whose rendering duration is not greater than theoretical duration of the call status, wherein the theoretical duration is duration from the start time point to the theoretical end time point; or
determining a call phase of the user equipment based on the call status, and selecting the target media content from media content that is in no audio conflict with that in the call phase; or
determining a call phase of the user equipment based on the call status, selecting the target media content from media content that is in an audio conflict with that in the call phase, and generating an audio conflict mark or an audio mark, so that when the user equipment is triggered to render the target media content, rendering of an audio part in the target media content is not triggered.

5. The method for rendering media content according to claim 2, wherein the call context information comprises existing call duration of the call service;
the obtaining call context information based on the call signaling comprises: determining that the call signaling is callee pickup call signaling; and calculating the existing call duration of the call service based on a timestamp in the call signaling and a current time point; and
the triggering, based on the call context information, the user equipment to render target media content on a target rendering occasion comprises: determining target rendering duration based on the existing call duration, and selecting the target media content from media content whose rendering duration is not greater than the target rendering duration.

6. The method for rendering media content according to claim 5, wherein the triggering, based on the call context information, the user equipment to render target media content on a target rendering occasion further comprises: setting a start time point of the target rendering occasion based on the current time point, and setting an end time point of the target rendering occasion based on the existing call duration.

7. The method for rendering media content according to claim 2, wherein the call service occurs between the user equipment and an interactive voice response (IVR) device, the call context information comprises key sequence information of the user equipment, the key sequence information comprises a key sequence of the user equipment, a start time point of a voice service corresponding to the key sequence, and a theoretical end time point of the voice service, the key sequence comprises keys that are entered in a time sequence by a user by using the user equipment in the call service process, and the obtaining call context information based on the call signaling comprises:
obtaining the key sequence information based on the call signaling and information sent by the IVR device.

8. The method for rendering media content according to claim 7, wherein the triggering, based on the call context information, the user equipment to render target media content on a target rendering occasion comprises:
setting a start time point of the target rendering occasion based on the start time point of the voice service corresponding to the key sequence, and setting an end time point of the target rendering occasion based on the theoretical end time point of the voice service; and
determining the target media content based on content of the voice service corresponding to the key sequence.

9. The method for rendering media content according to any one of claims 2 to 8, wherein the call context information further comprises predicted call duration of the call service, and the obtaining call context information based on the call signaling further comprises:
obtaining, based on the call signaling, a historical call duration record of the user corresponding to the user equipment; and
determining the predicted call duration based on the historical call duration record.

10. The method for rendering media content according to claim 9, wherein the triggering, based on the call context information, the user equipment to render target media content on a target rendering occasion further comprises:
setting the start time point and the end time point of the target rendering occasion based on the current time point and the predicted call duration; and
determining the target rendering duration based on the predicted call duration, and selecting the target media content from the media content whose rendering duration is not greater than the target rendering duration.

11. The method for rendering media content according to any one of claims 2 to 8, wherein the call context information further comprises plan information or account information corresponding to the user equipment, the plan information comprises a plan balance or a remaining plan validity period, the account information comprises an account balance, and the obtaining call context information based on the call signaling further comprises:
obtaining the plan information from a home subscriber server HSS or a business support system BSS based on the call signaling, or obtaining the account information from a BSS based on the call signaling; or obtaining the plan information or the account information from the call signaling; and
the triggering, based on the call context information, the user equipment to render target media content on a target rendering occasion further comprises: selecting the target media content from media content that matches the plan information or the account information.

12. The method for rendering media content according to claim 11, wherein the triggering, based on the call context information, the user equipment to render target media content on a target rendering occasion further comprises:
determining urgency of plan renewal or account recharge based on the plan balance or the remaining plan validity period or based on the account balance, and determining the target rendering occasion based on the urgency.

13. The method for rendering media content according to any one of claims 2 to 8, wherein the call context information further comprises location information of the user equipment, and the obtaining call context information based on the call signaling comprises: obtaining the location information of the user equipment from the call signaling; or obtaining the location information of the user equipment from a home subscriber server HSS based on the call signaling; and
the triggering, based on the call context information, the user equipment to render target media content on a target rendering occasion further comprises: determining freshness or frequency of the user equipment at a location corresponding to the location information, and determining the target rendering occasion based on the freshness or the frequency; and selecting the target media content from media content related to a business place related to the location information.

14. The method for rendering media content according to any one of claims 2 to 13, wherein the triggering the user equipment to render target media content on a target rendering occasion comprises:
negotiating a media channel with the user equipment by using the call signaling of the call service; and
sending a part or all of data in the target media content to the user equipment through the media channel at the start time point of the target rendering occasion.

15. The method for rendering media content according to claim 14, wherein the triggering the user equipment to render target media content on a target rendering occasion further comprises:
stopping, at the end time point of the target rendering occasion, sending the data in the target media content or data in the audio part in the target media content to the user equipment through the media channel.

16. A media application system, comprising:
a call context management module, configured to: receive call signaling of a call service from a call session control device; obtain call context information based on the call signaling, wherein the call context information comprises information used to describe progress of user equipment in the call service in a call service process; and enable, based on the call context information, the user equipment to render media content.

17. The media application system according to claim 16, wherein the media application system further comprises a media rendering module;
the call context management module is further configured to indicate, based on the call context information, the media rendering module to trigger the user equipment to render target media content on a target rendering occasion; and
the media rendering module is configured to trigger, based on an indication of the call context management module, the user equipment to render the target media content on the target rendering occasion.

18. The media application system according to claim 17, further comprising a rendering occasion determining module and a module for determining to-be-rendered content, wherein
the call context management module is further configured to: send the call context information to the rendering occasion determining module and receive the target rendering occasion from the rendering occasion determining module, and/or send the call context information to the module for determining to-be-rendered content and receive information about the target media content from the module for determining to-be-rendered content; and indicate, on the target rendering occasion, the media rendering module to trigger the user equipment to render the target media content;
the rendering occasion determining module is configured to: receive the call context information from the call context management module, determine the target rendering occasion based on the call context information, and send the target rendering occasion to the call context management module; and
the module for determining to-be-rendered content is configured to: receive the call context information from the call context management module, determine the target media content based on the call context information, and send the information about the target media content to the call context management module.

19. The media application system according to claim 18, wherein the call context information comprises call status information of the user equipment, and the call status information comprises a call status of the user equipment, a start time point of the call status, and a theoretical end time point of the call status;
the call context management module is further configured to determine the call status based on a signaling code or a status code in the call signaling;
the rendering occasion determining module is further configured to: determine the start time point and the theoretical end time point of the call status, set a start time point of the target rendering occasion based on the start time point, and set an end time point of the target rendering occasion based on the theoretical end time point; and
the module for determining to-be-rendered content is further configured to: select the target media content from media content whose rendering duration is not greater than theoretical duration of the call status, wherein the theoretical duration is duration from the start time point to the theoretical end time point; or determine a call phase of the user equipment based on the call status, and select the target media content from media content that is in no audio conflict with that in the call phase; or determine a call phase of the user equipment based on the call status, select the target media content from media content that is in an audio conflict with that in the call phase, and generate an audio conflict mark or an audio mark, so that when the user equipment is triggered to render the target media content, rendering of an audio part in the target media content is not triggered.

20. The media application system according to claim 18, wherein the call context information comprises existing call duration of the call service;
the call context management module is further configured to: determine that the call signaling is callee pickup call signaling; and calculate the existing call duration of the call service based on a timestamp in the call signaling and a current time point; and the rendering occasion determining module is further configured to: set a start time point of the target rendering occasion based on the current time point, and set an end time point of the target rendering occasion based on the existing call duration; and
the module for determining to-be-rendered content is further configured to: determine target rendering duration based on the existing call duration, and select the target media content from media content whose rendering duration is not greater than the target rendering duration.

21. The media application system according to claim 18, wherein the call service occurs between the user equipment and an interactive voice response IVR device, the call context information comprises key sequence information of the user equipment, the key sequence information comprises a key sequence of the user equipment, a start time point of a voice service corresponding to the key sequence, and a theoretical end time point of the voice service, and the key sequence comprises keys that are entered in a time sequence by a user by using the user equipment in the call service process;
the call context management module is further configured to obtain the key sequence information based on the call signaling and information sent by the IVR device;
the rendering occasion determining module is further configured to: set a start time point of the target rendering occasion based on the start time point of the voice service corresponding to the key sequence, and set an end time point of the target rendering occasion based on the theoretical end time point of the voice service; and
the module for determining to-be-rendered content is further configured to determine the target media content based on content of the voice service corresponding to the key sequence.

22. The media application system according to claim 18, wherein the call context information comprises predicted call duration of the call service;
the call context management module is further configured to: obtain, based on the call signaling, a historical call duration record of a user corresponding to the user equipment; and determine the predicted call duration based on the historical call duration record;
the rendering occasion determining module is further configured to set a start time point and an end time point of the target rendering occasion based on a current time point and the predicted call duration; and
the module for determining to-be-rendered content is further configured to: determine target rendering duration based on the predicted call duration, and select the target media content from media content whose rendering duration is not greater than the target rendering duration.

23. The media application system according to claim 18, wherein the call context information comprises plan information or account information corresponding to the user equipment, and the plan information comprises a plan balance or a remaining plan validity period;
the call context management module is further configured to: obtain the plan information from a home subscriber server HSS or a business support system BSS based on the call signaling, or obtain the account information from a BSS; or obtain the plan information or the account information from the call signaling;
the rendering occasion determining module is further configured to: determine urgency of plan renewal or account recharge based on the plan balance or the remaining plan validity period or based on the account balance, and determine the target rendering occasion based on the urgency; and
the module for determining to-be-rendered content is further configured to select the target media content from media content that matches the plan information or the account information.

24. The media application system according to claim 18, wherein the call context information comprises location information of the user equipment;
the call context management module is further configured to: obtain the location information of the user equipment from the call signaling; or obtain the location information of the user equipment from a home subscriber server HSS based on the call signaling;
the module for determining to-be-rendered content is further configured to select the target media content from media content related to a business place related to the location information; and
the rendering occasion determining module is further configured to: determine freshness or frequency of the user equipment at a location corresponding to the location information, and determine the target rendering occasion based on the freshness or the frequency.

25. The media application system according to any one of claims 18 to 24, comprising a media application device, wherein the media application device comprises the call context management module, the rendering occasion determining module, the module for determining to-be-rendered content, and the media rendering module.

26. The media application system according to any one of claims 18 to 24, comprising a call context management device, a media determining device, and a media rendering device, wherein the call context management device comprises the call context management module and the rendering occasion determining module, the media determining device comprises the module for determining to-be-rendered content, and the media rendering device comprises the media rendering module.

27. The media application system according to any one of claims 18 to 24, comprising a call context management device, a media determining device, and a media rendering device, wherein the call context management device comprises the call context management module, the media determining device comprises the module for determining to-be-rendered content and the rendering occasion determining module, and the media rendering device comprises the media rendering module.

28. A method for rendering media content, executed by a call context management device, wherein the method comprises:
receiving call signaling of a call service from a call session control device;
obtaining call context information based on the call signaling, wherein the call context information comprises information used to describe progress of user equipment in the call service in a call service process; and
indicating, based on the call context information, a media rendering device to trigger the user equipment to render target media content on a target rendering occasion.

29. The method for rendering media content according to claim 28, wherein the call context information comprises call status information of the user equipment, and the obtaining call context information based on the call signaling comprises:
determining the call status based on a signaling code or a status code in the call signaling.

30. The method for rendering media content according to claim 28, wherein the call context information comprises existing call duration of the call service, and the obtaining call context information based on the call signaling comprises:
determining that the call signaling is callee pickup call signaling; and
calculating the existing call duration of the call service based on a timestamp in the call signaling and a current time point.

31. The method for rendering media content according to claim 28, wherein the call service occurs between the user equipment and an interactive voice response IVR device, the call context information comprises key sequence information of the user equipment, the key sequence information comprises a key sequence of the user equipment, a start time point of a voice service corresponding to the key sequence, and a theoretical end time point of the voice service, the key sequence comprises keys that are entered in a time sequence by a user by using the user equipment in the call service process, and the obtaining call context information based on the call signaling comprises:
obtaining the key sequence information based on the call signaling and information sent by the IVR device.

32. The method for rendering media content according to any one of claims 28 to 31, wherein the call context information further comprises predicted call duration of the call service, and the obtaining call context information comprises:
obtaining, based on the call signaling, a historical call duration record of the user corresponding to the user equipment; and
obtaining the predicted call duration based on the historical call duration record.

33. The method for rendering media content according to any one of claims 28 to 31, wherein the call context information further comprises plan information or account information corresponding to the user equipment, and the obtaining call context information based on the call signaling comprises:
obtaining the plan information from a home subscriber server HSS or a business support system BSS based on the call signaling, or obtaining the account information from a BSS; or
obtaining the plan information or the account information from the call signaling.

34. The method for rendering media content according to any one of claims 28 to 31, wherein the call context information further comprises location information of the user equipment, and the obtaining call context information based on the call signaling comprises:
obtaining the location information of the user equipment from the call signaling; or
obtaining the location information of the user equipment from a home subscriber server HSS based on the call signaling.

35. A method for rendering media content, executed by a media determining device, wherein the method comprises:
receiving call context information from a call context management device, wherein the call context information comprises information used to describe progress of user equipment in a call service in a call service process;
determining a target rendering occasion and/or target media content based on the call context information; and
sending the target rendering occasion and/or information about the target media content to the call context management device, so that the call context management device triggers the user equipment to render the target media content on the target rendering occasion.

36. The method for rendering media content according to claim 35, wherein the call context information comprises call status information of the user equipment, the call status information comprises a call status of the user equipment, a start time point of the call status, and a theoretical end time point of the call status, and the determining a target rendering occasion and/or target media content based on the call context information comprises:
setting a start time point of the target rendering occasion based on the start time point of the call status, and setting an end time point of the target rendering occasion based on the theoretical end time point; and/or
selecting the target media content from media content whose rendering duration is not greater than theoretical duration of the call status, wherein the theoretical duration is duration from the start time point to the theoretical end time point; or determining a call phase of the user equipment based on the call status, and selecting the target media content from media content that is in no audio conflict with that in the call phase; or determining a call phase of the user equipment based on the call status, selecting the target media content from media content that is in an audio conflict with that in the call phase, and generating an audio conflict mark or an audio mark, so that when the user equipment is triggered to render the target media content, rendering of an audio part in the target media content is not triggered.

37. The method for rendering media content according to claim 35, wherein the call context information comprises existing call duration of the call service, and the determining a target rendering occasion and/or target media content based on the call context information comprises:
setting a start time point of the target rendering occasion based on a current time point, and setting an end time point of the target rendering occasion based on the existing call duration; and/or
determining target rendering duration based on the existing call duration, and selecting the target media content from media content whose rendering duration is not greater than the target rendering duration.

38. The method for rendering media content according to claim 35, wherein the call service occurs between the user equipment and an interactive voice response IVR device, the call context information comprises key sequence information of the user equipment, the key sequence information comprises a key sequence of the user equipment, a start time point of a voice service corresponding to the key sequence, and a theoretical end time point of the voice service, and the determining a target rendering occasion and/or target media content based on the call context information comprises:
setting a start time point of the target rendering occasion based on the start time point of the voice service corresponding to the key sequence, and setting an end time point of the target rendering occasion based on the theoretical end time point of the voice service; and/or
determining the target media content based on content of the voice service corresponding to the key sequence.

39. The method for rendering media content according to any one of claims 35 to 38, wherein the call context information further comprises predicted call duration of the call service, and the determining a target rendering occasion and/or target media content based on the call context information comprises:
setting the start time point and the end time point of the target rendering occasion based on the current time point and the predicted call duration; and/or
determining the target rendering duration based on the predicted call duration, and selecting the target media content from the media content whose rendering duration is not greater than the target rendering duration.

40. The method for rendering media content according to any one of claims 35 to 38, wherein the call context information further comprises plan information or account information corresponding to the user equipment, the plan information comprises a plan balance or a remaining plan validity period, the account information comprises an account balance, and the determining a target rendering occasion and/or target media content based on the call context information comprises:
determining urgency of plan renewal or account recharge based on the plan balance or the remaining plan validity period or based on the account balance, and determining the target rendering occasion based on the urgency; and/or
selecting the target media content from media content that matches the plan information or the account information.

41. The method for rendering media content according to any one of claims 35 to 38, wherein the call context information further comprises location information of the user equipment, and the determining a target rendering occasion and/or target media content based on the call context information comprises:
determining freshness or frequency of the user equipment at a location corresponding to the location information, and determining the target rendering occasion based on the freshness or the frequency; and/or
selecting the target media content from media content related to a business place related to the location information.

42. A call context management device, comprising a processor and a memory, wherein
the memory is configured to store program instructions; and
the processor is configured to invoke and execute the program instructions stored in the memory, so that the call context management device performs the method for rendering media content according to any one of claims 28 to 34.

43. A computer-readable storage medium, comprising instructions, wherein when the instructions are run on a computer, the computer is enabled to perform the method for rendering media content according to any one of claims 28 to 34.

44. A media determining device, comprising a processor and a memory, wherein
the memory is configured to store program instructions; and
the processor is configured to invoke and execute the program instructions stored in the memory, so that the media determining device performs the method for rendering media content according to any one of claims 35 to 41.

45. A computer-readable storage medium, comprising instructions, wherein when the instructions are run on a computer, the computer is enabled to perform the method for rendering media content according to any one of claims 35 to 41.
